# FASCICULE DE BREVET EUROPEEN

(11) **EP 0 599 753 B1**
(45) Date de publication et mention de la délivrance du brevet: **13.08.1997**
(21) Numéro de dépôt: 93420469.4
(22) Date de dépôt: 25.11.1993
(51) Int. Cl.: F16L 3/22, H02G 3/04, H02G 3/06

(54) **Elément de couvercle et élément de chemin de câbles et procédé de fixation de l'un avec l'autre**
Abdeckung und Kabelrinnen und Verfahren zum Verbinden der beiden Teile
Cover and cable duct and method of fixing both together

(30) Priorité: 26.11.1992 FR 9214681
(43) Date de publication de la demande: 01.06.1994
(73) Titulaire: KRIEG ET ZIVY INDUSTRIES, F-92100 Boulogne-Billancourt (FR)
(72) Inventeur: Boltz, Roland, F-60190 Estrées St. Denis (FR)
(74) Mandataire: Desolneux, Jean-Paul Charles

(56) Documents cités:
- EP-A- 0 057 879
- EP-A- 0 461 974
- EP-A- 0 590 616
- DE-U- 8 700 773
- FR-A- 2 419 423
- US-A- 4 951 716

## Description

La présente invention concerne, d'une façon générale, les éléments de couvercles utilisés pour couvrir les chemins de câbles. Elle concerne plus particulièrement les éléments de couvercles munis de moyens de fixation permettant d'assurer leur fixation sur les chemins de câbles correspondants.

Dans le cas des chemins de câbles en tôle, l'invention concerne aussi des moyens permettant de faciliter la mise en place des éléments de couvercle suivant l'invention et aussi des moyens permettant d'accroître la résistance à la déformation de ces couvercles.

De façon générale, on connaît deux types d'éléments permettant de réaliser les chemins de câbles généralement réalisés en métal : ceux qui sont constitués d'un treillis de fils et ceux qui sont constitués par de la tôle le plus souvent perforée. Dans les deux cas, les éléments ont le plus souvent une section transversale en forme générale de U et sont aptes à recevoir un couvercle de protection généralement en tôle.

De nombreux moyens sont proposés pour assurer une liaison suffisamment résistante entre les éléments de couvercle et les éléments correspondants de chemin de câbles.

Ainsi, dans un récent catalogue au nom de la société KRIEG et ZIVY, est décrit un mode de liaison élastique entre élément de couvercle en tôle en forme de U comportant des bords aptes à recouvrir par emboîtement les extrémités des parois latérales d'un élément de chemin de câbles en tôle. Le couvercle comporte sur ses bords des bossages disposés à intervalles réguliers, qui s'engagent élastiquement dans des trous pratiqués dans les parois latérales de l'élément de chemin de câbles en tôle.

Ce même catalogue propose un moyen de liaison élastique entre un couvercle en tôle et un élément de chemin de câbles en treillis de fils.
Dans ce cas, les bords latéraux du couvercle en tôle en forme de U sont légèrement incurvés vers l'intérieur et doivent être engagés à force par dessus les fils de chaîne constituant les bords de rive du chemin de câbles. Ainsi le couvercle est retenu par un serrage élastique de ses bords sur les bords de rives correspondants du chemin de câbles.

Les moyens de liaison élastique qui viennent d'être décrits n'ont qu'une faible tenue mécanique, très souvent insuffisante pour assurer la fixation du couvercle sur le chemin de câbles, en particulier dans le cas de chemins de câbles comportant des parties disposées verticalement. On peut aussi faire appel à différents types de clips, montés extérieurement, qui assurent aussi un serrage élastique du couvercle sur l'élément de chemin de câbles avec cependant les mêmes inconvénients.

On a donc recherché la possibilité de réaliser un couvercle pour chemin de câbles apte à être monté et démonté sur des éléments en treillis de fils ou en tôle de façon très rapide, sans faire appel à des moyens de liaison indépendants ou supplémentaires tels que clips ou boulons.

On a cherché aussi à réaliser des couvercles pour chemins de câbles permettant d'assurer au couvercle une liaison mécanique suffisante dans les diverses conditions d'utilisation. On a recherché aussi la possibilité éventuelle d'utiliser un seul moyen de fixation solidaire de l'élément de couvercle et utilisable pour assurer une liaison de tenue mécanique suffisante, entre celui-ci et différents types d'éléments de chemin de câbles en tôle ou en treillis de fils.

De la façon la plus générale, l'élément de couvercle muni de moyens de fixation et monté sur un élément de chemin de câbles suivant l'invention selon la revendication 1 permet de résoudre les problèmes exposés ci-dessus.

L'élément de couvercle suivant l'invention est en tôle métallique et sa paroi comporte deux bords latéraux pliés sensiblement à angle droit à l'intérieur desquels peuvent s'emboîter partiellement les extrémités des deux parois latérales d'un élément de chemin de câble en U. Cet élément de couvercle comporte comme moyen de fixation de chaque côté au moins une patte de fixation découpée dans sa paroi dont une extrémité est solidaire de cette paroi, l'autre extrémité libre étant dans le plan d'un bord latéral de ce couvercle.

Cette patte de fixation est apte à être pliée en engageant son extrémité libre à l'intérieur de l'élément de chemin de câbles afin de réaliser un appui localisé de cette patte de fixation contre une zone déterminée de cet élément de chemin de câbles, établissant ainsi une liaison entre l'élément de couvercle et l'élément de chemin de câbles.

De préférence, pour faciliter le pliage de la patte de fixation vers l'intérieur, on perce celle-ci d'un trou de relativement faible diamètre et on utilise un levier de dimensions adaptées, dont une extrémité est apte à s'engager dans le trou, pour réaliser ce pliage. De préférence également, le pliage est effectué en faisant tourner l'extrémité libre de la patte de fixation dans un plan sensiblement parallèle à la direction longitudinale de cette patte et perpendiculaire au plan du bord du couvercle.

Dans le cas où l'élément de couvercle en tôle doit être fixé sur un élément de chemin de câbles en tôle également, le moyen de fixation est constitué par au moins une patte de fixation découpée dans chacun des deux bords latéraux de l'élément de couvercle, allongée parallèlement à la direction longitudinale du couvercle et solidarisée avec ce bord par l'une de ses extrémités. Chacune de ces pattes est apte à se plier vers l'intérieur au moyen d'un outil adapté, le mouvement de déplacement s'effectuant dans un plan sensiblement parallèle à la direction longitudinale du couvercle et perpendiculaire au plan de ce bord. Il est possible ainsi d'engager l'extrémité libre de la patte de fixation à l'intérieur de l'élément en tôle de chemin de câbles à travers un trou réalisé dans la paroi latérale, trou qui a été au préalable disposé en regard de la patte de fixation. De tels trous en général oblongs existent sur les parois latérales des chemins de câbles.

De préférence, on donne au bord de chacune de ces pattes de fixation, allongées parallèlement à la direction longitudinale de cet élément de couvercle, une forme sensiblement trapézoïdale. La petite base qui est au voisinage de l'extrémité libre de la patte de fixation est de largeur inférieure à celle du trou dans lequel il s'agit d'engager la patte et la grande base qui est au voisinage de l'extrémité solidaire du bord latéral du couvercle, a une largeur suffisante pour que les bords de la patte de fixation, après engagement dans le trou coopèrent avec les bords de celui-ci pour assurer le calage du couvercle.

Les pattes de fixation, allongées parallèlement à la direction longitudinale de l'élément de couvercle, peuvent être toutes orientées dans le même sens.

On peut également disposer au moins une patte de fixation, allongée parallèlement à la direction longitudinale du couvercle, de forme trapézoïdale ou non en l'orientant dans un sens, une autre patte étant orientée dans le sens opposé. Avantageusement, une patte de fixation disposée sur un bord est orientée en sens opposé d'une patte de fixation située sur le bord opposé, en vis-à-vis.

Avantageusement également, on utilise des chemins de câbles en tôle munis de trous perforés oblongs sur les parois latérales situés en face les uns des autres et on dimensionne les pattes de fixation longitudinales en fonction de la longueur de ces trous. Deux pattes de fixation, correspondant à deux trous situés en face l'un de l'autre, sont disposées avantageusement de part et d'autre d'un plan perpendiculaire à la direction longitudinale du couvercle, plan transversal qui intersecte chacun des deux trous en son milieu. Chacune des deux extrémités de ces pattes de fixation solidaire d'un bord du couvercle se trouve au voisinage immédiat mais de part et d'autre de la ligne d'intersection de ce bord par ce plan.

Dans les cas où l'élément de couvercle en tôle doit être fixé sur un élément de chemin de câbles réalisé en treillis de fils, le moyen de fixation suivant l'invention est constitué par au moins une patte de fixation sur chaque bord, orientée transversalement par rapport à l'axe longitudinal de l'élément de couvercle et dont au moins l'extrémité libre se trouve dans le plan du bord de l'élément de couvercle, l'autre extrémité étant solidarisée avec le couvercle au voisinage de la liaison entre le bord de celui-ci et la surface principale. Chacune de ces pattes de fixation est apte à être pliée vers l'intérieur, avantageusement au moyen d'un outil adapté, l'extrémité libre de cette patte se déplaçant dans un plan sensiblement perpendiculaire à la direction longitudinale du couvercle.

On peut ainsi faire venir en appui la patte de fixation contre la paroi latérale, par exemple contre la paroi d'un fil de chaîne, d'un chemin de câbles.

De préférence, on utilise pour la fixation d'un élément de couvercle en tôle sur un élément de chemin de câbles en treillis de fils, au moins deux pattes de fixation, une sur chaque bord, orientées transversalement par rapport à la direction longitudinale du bord correspondant. Ces deux pattes de fixation sont décalées longitudinalement l'une par rapport à l'autre. Ce décalage est réalisé de façon qu'elles se trouvent de part et d'autre d'un plan transversal perpendiculaire à la direction longitudinale du couvercle, l'écart entre les pattes de fixation et ce plan étant suffisant pour que ces pattes soient aptes à venir en appui contre la paroi latérale par exemple la paroi d'un fil de chaîne en laissant entre elles le passage d'un fil de trame.

De préférence, le moyen de fixation suivant l'invention permet de solidariser un élément de couvercle avec un élément de chemin de câbles réalisé indifféremment en treillis de fils ou en tôle. Dans ce cas, il comporte, découpé dans chacun des deux bords latéraux de l'élément de couvercle, au moins un groupe de deux pattes de fixation disposées l'une au-dessus de l'autre et comprenant une patte de fixation allongée parallèlement à la direction longitudinale du bord du couvercle correspondant et une patte allongée transversalement à cette même direction longitudinale. De plus, les deux pattes de fixation situées sur un même bord sont décalées par rapport à celles situées en vis-à-vis sur l'autre bord de façon à se trouver de part et d'autre par rapport à un plan transversal perpendiculaire à la direction du couvercle.

De préférence, on utilise plusieurs ensembles de moyens de fixation suivant l'invention, répartis le long des bords d'un élément de couvercle à des intervalles déterminés. Chaque ensemble comprend deux groupes de deux pattes de fixation décalés l'un par rapport à l'autre de façon à se trouver de part et d'autre d'un plan transversal. La distance entre ces plans transversaux successifs doit correspondre à la distance entre des fils de trame d'un élément de chemin de câble en treillis de fils ou à celle existant entre des trous d'un élément en tôle ou à des multiples exacts de ces distances.

Lorsque l'on veut utiliser les éléments de couvercle pour un seul type de chemin de câbles, en tôle ou en treillis de fils, l'ensemble dont il est question ci-dessus est réduit à une seule patte du type qui convient au chemin de câbles utilisé.

Avantageusement, on utilise, pour effectuer le pliage des pattes de fixation un levier constitué par une tige apte à s'engager sur une petite partie de sa longueur dans un trou percé à travers cette patte, ce levier permettant de plier la patte vers l'intérieur de l'élément de chemin de câbles de la quantité nécessaire, c'est-à-dire, le plus souvent environ 90°. Un tel levier permet aussi de faire revenir ces pattes à leur position initiale dans le plan du bord latéral du couvercle, pour le démontage de celui-ci.

Avantageusement, le levier est coudé pour faciliter le déplacement angulaire.

L'invention concerne également un procédé de fixation d'un élément de couvercle sur un élément de chemin de câbles selon la revendication 21.

De préférence, on découpe au moyen d'un outil adapté tel qu'un emporte-pièce deux groupes de deux pattes de fixation, chaque groupe étant situé sur un bord du couvercle et comprenant une patte de fixation longitudinale et une patte de fixation transversale.

De préférence également, on détermine la longueur de la découpe des pattes de fixation transversales pour que cette découpe après pliage des bords du couvercle s'étende au-delà des arêtes de pliage sur la surface principale du couvercle sur une longueur égale approximativement au diamètre d'un fil de chaîne pour faciliter l'enroulement de ces pattes transversales autour d'un fil de rive ondulé, soudé en bout sur le fil de trame d'un élément de chemin de câbles en treillis de fils.

De plus, pour faciliter l'utilisation d'un élément de couvercle en tôle suivant l'invention pour couvrir des chemins de câbles en tôle, on peut apporter les perfectionnements décrits ci-après.

En effet, la liaison bout à bout des éléments de chemin de câbles en tôle est faite le plus souvent par des éclisses plates ou cornières disposées à cheval sur les extrémités des éléments de chemin de câbles et reliées par des boulons au fond et aux deux parois latérales de ces éléments.

Pour obtenir une bonne résistance à la flexion les éclisses solidarisées avec les parois latérales ont une hauteur voisine de celle de ces parois et certains boulons d'assemblage traversent des trous allongés des parois latérales proches du bord de celles-ci qui sont précisément ceux qui peuvent être utilisés pour la fixation du couvercle par ses pattes longitudinales.

Non seulement on ne peut pas engager de pattes dans ces trous mais, de plus, les bords latéraux du couvercle viennent buter sur les écrous ou sur les têtes de boulons dans les zones d'extrémité.

On peut déformer ces bords latéraux pour qu'ils recouvrent ces écrous ou têtes de boulons et procéder à un accrochage des pattes de fixation dans une zone éloignée de l'extrémité de l'élément de couvercle.

Pour éviter ces inconvénients, on utilise, de façon particulièrement avantageuse, un couvercle en tôle de longueur égale à celle de l'élément de chemin de câbles et on munit les bords latéraux de ce couvercle, au voisinage de chacune de leurs extrémités, d'un nombre de trous au moins égal au nombre de boulons reliant chaque éclisse à la paroi latérale de l'élément de chemin de câbles correspondant, dans la zone proche du bord de rive normalement recouverte par le bord latéral du couvercle.

Ces trous, réalisés dans les bords latéraux du couvercle, sont disposés de façon telle que, lorsque le couvercle est placé sur l'élément de chemin de câbles en position de fixation par ses pattes longitudinales, ses extrémités coïncident avec celles de l'élément de chemin de câbles, l'axe de chaque trou correspondant approximativement avec celui d'un trou longitudinal de la paroi de l'élément de chemin de câbles apte à recevoir un boulon d'assemblage.

Ces trous des bords latéraux du couvercle sont avantageusement allongés parallèlement à l'axe du couvercle pour tenir compte des écarts de mise en place des boulons et leur largeur transversale est au moins égale au diamètre du cercle circonscrit à l'écrou ou à la tête d'un boulon d'assemblage.

Dans ces conditions, on constate que l'élasticité du couvercle permet d'engager les trous ainsi réalisés autour des écrous en mettant le couvercle en place sur le chemin de câbles.

De préférence, on met le couvercle en place en engageant d'abord les trous d'un même bord latéral autour des écrous ou têtes de boulons solidarisant les éclisses d'assemblage, puis on rabat l'autre bord du couvercle sur l'autre paroi latérale en utilisant l'élasticité du couvercle en flexion autour d'un axe longitudinal pour faire passer ce bord par dessus les écrous ou têtes de boulons jusqu'à engagement de ceux-ci dans les trous correspondants.

On effectue ensuite, comme décrit plus haut, la liaison de ce couvercle à l'élément de chemin de câbles par pliage des pattes de fixation longitudinales qu'on engage dans les trous allongés correspondants des parois latérales. Ce procédé modifié de fixation d'un élément de couvercle sur un élément de chemin de câbles qui fait aussi partie de l'invention constitue une fixation renforcée de l'élément de couvercle puisque les écrous ou têtes de boulons exercent également une retenue du couvercle.

Lorsqu'on utilise, pour la liaison de chaque éclisse avec la paroi latérale correspondante de l'élément de chemin de câbles, deux rangées de deux ou trois boulons, seule la rangée supérieure est recouverte par le bord correspondant du couvercle.

Pour certaines applications, on peut éviter la réalisation des trous qui viennent d'être décrits aux extrémités des bords latéraux du couvercle en face des têtes de boulons ou des écrous. Il suffit, en effet, de réduire la hauteur des bords du couvercle dans les zones d'extrémité de la quantité nécessaire pour que, après mise en place du couvercle, les bords latéraux de celui-ci ne recouvrent pas les écrous ou têtes de boulons.

Pour cela, on peut découper les bords latéraux du couvercle dans la zone d'assemblage par boulons suivant une droite parallèle à l'axe longitudinal du couvercle et tangente aux points hauts des cercles circonscrits aux écrous ou têtes de boulons quand le couvercle est en position d'assemblage avec l'élément de chemin de câbles.

Au lieu d'une découpe unique, à chaque extrémité de chaque bord latéral, on peut réaliser plusieurs découpes séparées, localisées chacune au niveau d'un écrou ou tête de boulon d'assemblage. Il est ainsi possible de mettre le couvercle en place, ses deux bords venant s'engager simultanément autour des parois latérales de l'élément de chemin de câbles et les découpes permettant d'arrêter le couvercle à un niveau très voisin de celui qui permet d'engager ses pattes longitudinales de fixation dans les trous correspondants.

L'utilisation de plusieurs découpes localisées permet, comme celle des trous décrits plus haut, d'assurer en même temps de façon approximative le calage longitudinal de ce couvercle. On donne avantageusement, dans ce cas, à chaque découpe localisée, une section égale à la moitié supérieure des trous décrits plus haut et un emplacement identique sur le bord latéral du couvercle.

Bien que les éléments de chemin de câbles en tôle ainsi munis de couvercles fixés par des pattes longitudinales mais dépourvus de ces moyens de fixation à leurs extrémités, présentent déjà une excellente tenue mécanique, à laquelle contribue le couvercle, grâce à sa fixation en de nombreux points sur l'élément de chemin de câbles correspondant, des améliorations sont possibles.

Ainsi il est avantageux de décaler la position longitudinale des éléments de couvercle en tôle par rapport aux éléments de chemin de câbles en tôle lorsque ces derniers éléments sont assemblés bout à bout dans le prolongement les uns des autres. Ceci est possible, à condition que les parois latérales des éléments de chemin de câbles et leurs trous longitudinaux soient alignés suivant un même axe, ces trous longitudinaux présentant un même pas, sans écart notable au niveau des jonctions entre deux éléments. Dans ces conditions, on munit les bords latéraux de chaque couvercle de trous ou découpes situés dans une zone appropriée, de préférence à mi-distance des extrémités. Ces trous sont en nombre suffisant ou bien il s'agit de découpes localisées, le nombre de ceux-ci ou de celles-ci étant déterminé pour recouvrir à cheval sur les extrémités des deux chemins de câbles la zone d'assemblage par boulons de chaque éclisse. Grâce aux pattes longitudinales de fixation qui peuvent, dans ce cas, être disposées jusqu'aux deux extrémités du couvercle on obtient, de façon générale, une excellente fixation.

Pour accroître la rigidité des éléments de couvercle en tôle, que ceux-ci soient fixés sur un élément de chemin de câbles en tôle ou en treillis de fils, on peut réaliser sur le plan principal de ce couvercle des nervures transversales. Ces nervures sont, de préférence, réalisées par emboutissage. Ces nervures ont, le plus souvent, une longueur un peu inférieure à la largeur du couvercle. La largeur individuelle de ces nervures, leur hauteur et leur pas, c'est-à-dire la distance entre leurs axes, peuvent varier dans de larges limites.

Pour éviter que ces nervures ne viennent au contact du contenu des chemins de câbles, il y a intérêt, le plus souvent, à les déformer à partir de l'intérieur du couvercle et à limiter cependant leur hauteur à environ 10 à 20 % de la hauteur des éléments de chemin de câbles. Le couvercle ainsi renforcé permet, après fixation sur tous types de chemins de câbles d'accroître de façon importante la rigidité de l'ensemble.

Dans le cas de chemins de câbles en tôle, le couvercle ainsi renforcé peut être muni de bords latéraux pourvus non seulement de pattes longitudinales mais aussi de trous ou découpes permettant l'utilisation d'éclisses assemblées par boulons munis d'écrous.

Les exemples et les figures schématiques ci-après décrivent, de façon non limitative, des modes particuliers de réalisation d'un élément de couvercle pour élément de chemin de câbles et des moyens de fixation suivant l'invention, ainsi que des modes particuliers de mise en oeuvre du procédé de fixation d'un élément de couvercle sur un élément de chemin de câbles.

Figure 1 : vue schématique, en perspective, d'un élément de couvercle pour élément de chemin de câbles, comportant des pattes de fixation, suivant l'invention.

Figure 2 : vue schématique, en perspective, d'un élément de chemin de câbles en tôle apte à coopérer avec l'élément de couvercle de la figure 1.

Figure 3 : vue schématique de l'assemblage du couvercle de la figure 1 avec le chemin de câbles de la figure 2.

Figure 4 : vue en coupe transversale d'un détail de la figure 3.

Figure 5 : vue schématique, en perspective, d'un élément de chemin de câbles en treillis de fils apte à coopérer avec l'élément de couvercle de la figure 1.

Figure 6 : vue schématique, en perspective, de l'assemblage de l'élément de couvercle de la figure 1 avec l'élément de chemin de câbles en treillis de fils de la figure 5.

Figure 7 : vue schématique en coupe transversale d'un détail de la figure 6.

Figure 8 : vue schématique en perspective d'un élément de chemin de câbles en treillis de fils avec fil de chaîne ondulé.

Figure 9 : vue schématique, en perspective, de l'assemblage de l'élément de couvercle de la figure 1 avec l'élément de chemin de câbles de la figure 8.

Figure 10 : vue schématique, en coupe transversale, d'un détail de la figure 9.

La figure 11 est une vue schématique en perspective d'un élément de couvercle en tôle comportant seulement des pattes de fixation longitudinales.

La figure 12 est une vue schématique en perspective de l'assemblage de l'élément de couvercle de la figure 11 avec l'élément de chemin de câbles en tôle de la figure 2.

La figure 13 est une vue en coupe transversale d'un détail de la figure 12.

La figure 14 est une vue schématique en perspective d'un élément de couvercle en tôle comportant seulement des pattes de fixation transversales.

La figure 15 est une vue schématique en perspective de l'assemblage de l'élément de couvercle de la figure 14 avec l'élément de chemin de câbles de la figure 5.

La figure 16 est une vue en coupe transversale d'un détail de la figure 15.

Figure 17 : vue schématique partielle en élévation d'un élément de couvercle en tôle dont les bords latéraux comportent des trous en extrémité.

Figure 18 : vue schématique montrant le mode de mise en place de l'élément de couvercle de la figure 17 sur un élément de chemin de câbles.

Figure 19 : vue schématique montrant l'élément de couvercle de la figure 17 assemblé avec l'élément de chemin de câbles.

Figure 20 : vue schématique d'un élément de couvercle tel que celui de la figure 17 dont on a remplacé les trous par une découpe du bord latéral.

Figure 21 : vue schématique d'un élément de couvercle tel que celui de la figure 20 comportant des découpes partielles au lieu d'une découpe unique.

Figure 22 : vue schématique d'un élément de couvercle tel que celui de la figure 21 comportant des découpes partielles dans la zone médiane.

Figure 23 : vue schématique en élévation d'un élément de couvercle tel que celui de la figure 17 comportant des nervures.

Figure 24 : vue schématique en coupe transversale de l'élément de couvercle de la figure 23.

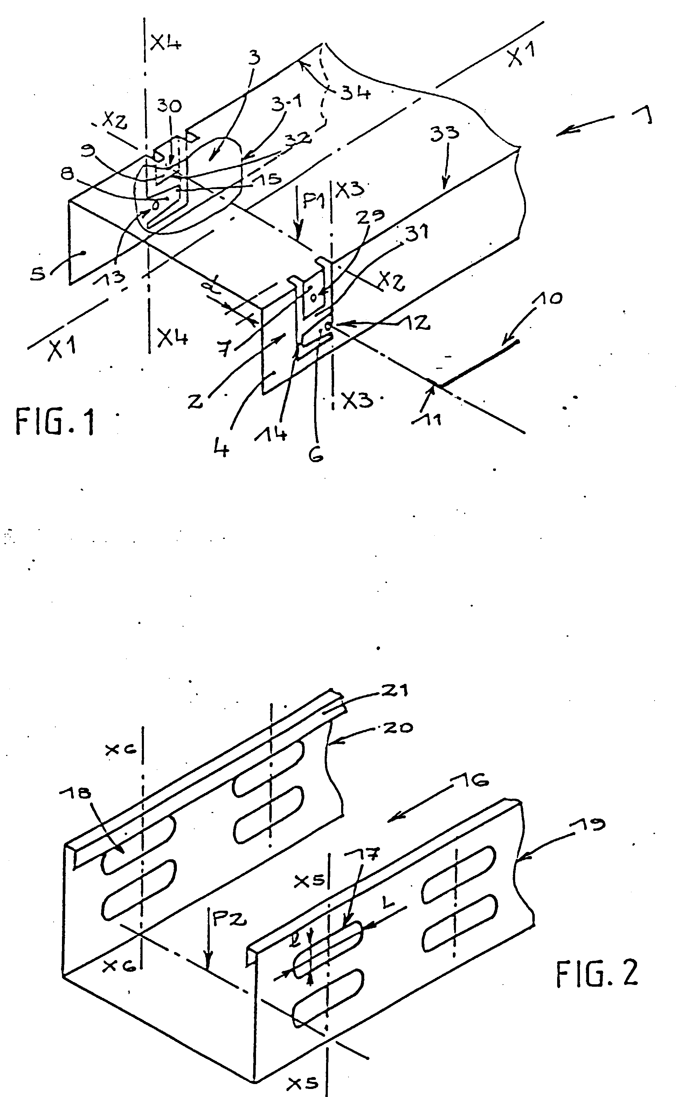

Les figures 1, 2 et 3 représentent de façon schématique, en perspective, un mode de réalisation de l'élément de couvercle suivant l'invention avec son moyen de fixation et de mise en oeuvre de ce moyen de fixation.

On voit figure 1 un tronçon d'un élément de couvercle en tôle 1, apte à être monté et fixé sur un élément de chemin de câbles en tôle ou en treillis de fils, grâce à au moins deux groupes de pattes de fixation 2, 3 comprenant chacun deux pattes de fixation 6, 7 et 8, 9, ces deux groupes se trouvant chacun sur un bord 4, 5 de ce couvercle 1.

Le groupe 3 est rendu visible sur la figure 1 grâce à une découpe 3-1. Chacun de ces deux groupes de pattes de fixation 6, 7 et 8, 9 est découpé dans la tôle du couvercle 1 au moyen d'un outil convenable tel qu'un outil de poinçonnage.

Les deux groupes 2, 3 sont décalés de part et d'autre d'un plan transversal P1 perpendiculaire à la direction longitudinale X1-X1 de l'élément de couvercle.
Ce plan P1 intersecte le plan principal du couvercle 1 en X2-X2 et les bords 4, 5 suivent les segments de droites X3-X3 et X4-X4 perpendiculaires à X2-X2. Ces segments X3-X3 et X4-X4 traversent chacun la zone de liaison d'une patte de fixation longitudinale 6, 8 avec le bord correspondant 4, 5 du couvercle 1. Ces pattes de fixation longitudinales 6, 8 sont orientées en sens contraires. On peut, en pliant les pattes de fixation longitudinales 6, 8 vers l'intérieur au moyen d'un outil tel qu'un levier 10 dont on engage une extrémité 11, de préférence coudée approximativement à angle droit, dans un trou adapté 12, 13 percé dans chaque patte de fixation 6, 8, faire tourner chaque patte de fixation à partir de l'extrémité libre 14, 15 dans un plan sensiblement parallèle à la direction longitudinale de l'élément de couvercle 1 et perpendiculaire à P1. On peut effectuer ainsi une rotation d'environ 90°.

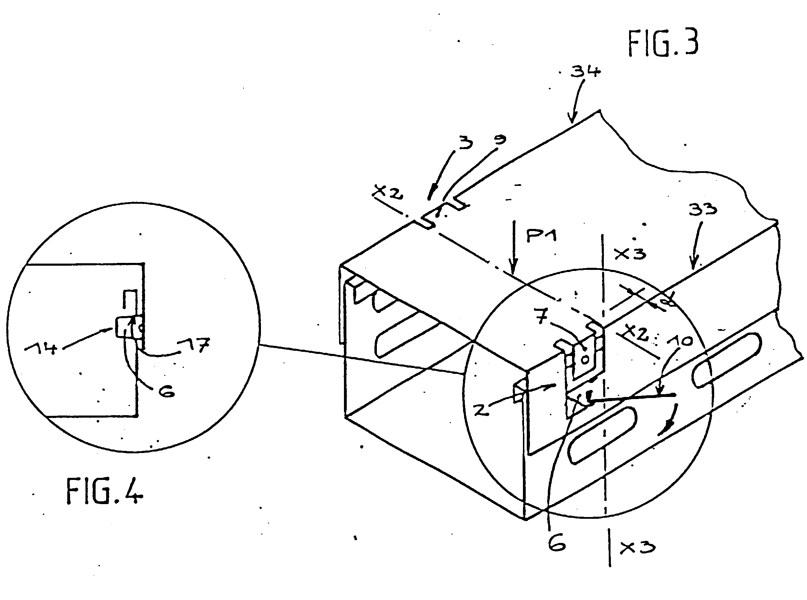

Comme le montrent les figures 2 et 3, les parois latérales 19, 20 de l'élément de chemin de câbles en tôle 16 comportent des trous allongés tels que 17, 18 situés en face les uns des autres. Les parois latérales 19, 20 sont ici renforcées comme le montre la figure 2 par des bords repliés tels que 21 pour accroître leur rigidité. Comme le montrent la figure 3 et la figure 4 qui est une coupe transversale schématique de la figure 3 au niveau du groupe 2 de pattes de fixation, on place l'élément de couvercle 1 sur l'élément de chemin de câbles en tôle 16 de façon à faire correspondre le plan transversal P1 du couvercle 1 avec le plan transversal P2 perpendiculaire à la direction longitudinale du chemin de câbles 16 qui coupe les trous latéraux 17, 18 par leur milieu suivant les segments de droites X5-X5 et X6-X6.

Chacun de ces trous a une forme oblongue sensiblement rectangulaire et est approximativement symétrique par rapport au plan P2. La longueur "L" de chacun de ces trous tels que 17, 18 est au moins double de celle des pattes de fixation 6, 8 et la largeur "1" est sensiblement égale à la largeur maximale de ces pattes de fixation longitudinales de forme trapézoïdale dont la grande base se trouve au voisinage de la zone de liaison avec les bords 4, 5 du couvercle 1.

Il est ainsi facile d'introduire par pliage vers l'intérieur les pattes de fixation longitudinales au moyen du levier 10.

Il peut cependant être nécessaire d'ajuster en hauteur le couvercle 1 dont les pattes de fixation 6, 8 peuvent ne pas se trouver exactement au même niveau que les trous 17, 18 lorsque ce couvercle 1 se trouve en appui sur les parois latérales 19, 20 de l'élément de chemin de câbles 16.

La figure 4 montre, de façon schématique, la patte de fixation 6 pliée sensiblement à angle droit et engagée à travers le trou 17, son bord libre 14 étant dirigé vers l'intérieur et sa partie de largeur accrue proche de sa zone de liaison avec le bord 4 du couvercle 1 étant coincée contre les bords du trou 17 au voisinage du milieu de celui-ci.

Il est possible, grâce à la ductilité de la tôle, de redresser les pattes de fixation telles que 6, 8 au moyen du levier 10 et de débloquer ainsi le couvercle 1.

On remarque que seules les pattes de fixation 6, 8 sont utilisées, les deux pattes de fixation 7, 9 étant prévues pour la fixation de l'élément de couvercle 1 sur un élément de chemin de câbles en treillis de fils. On peut donc utiliser aussi des éléments de couvercle ne comportant que des pattes de fixation longitudinales ou transversales qui ne pourront alors être utilisés que sur un type de chemin de câbles en tôle ou en treillis de fils correspondant au type de pattes de fixation dont est équipé le couvercle.

Bien qu'un seul ensemble de deux groupes de pattes de fixation soit représenté sur l'élément de couvercle 1, ces ensembles sont réalisés dans la pratique à intervalles déterminés le long d'un élément de couvercle pour assurer une fixation solide de celui-ci sur l'élément de chemin de câbles en tôle. Il en est bien sûr de même lorsqu'on utilise des éléments de couvercle pourvus uniquement de pattes de fixation allongées suivant l'axe longitudinal de ces éléments de couvercle.

Différents types d'outils peuvent être utilisés pour le pliage des pattes de fixation, les leviers tels que 10, de préférence coudés en 11 ayant l'avantage de la simplicité et de l'efficacité dans le cas des pattes de fixation percées de trous tels que 12, 13.

D'autres types d'outils tels que des tournevis de format voulu peuvent permettre le pliage de pattes de fixation suivant l'invention dépourvues de trous.

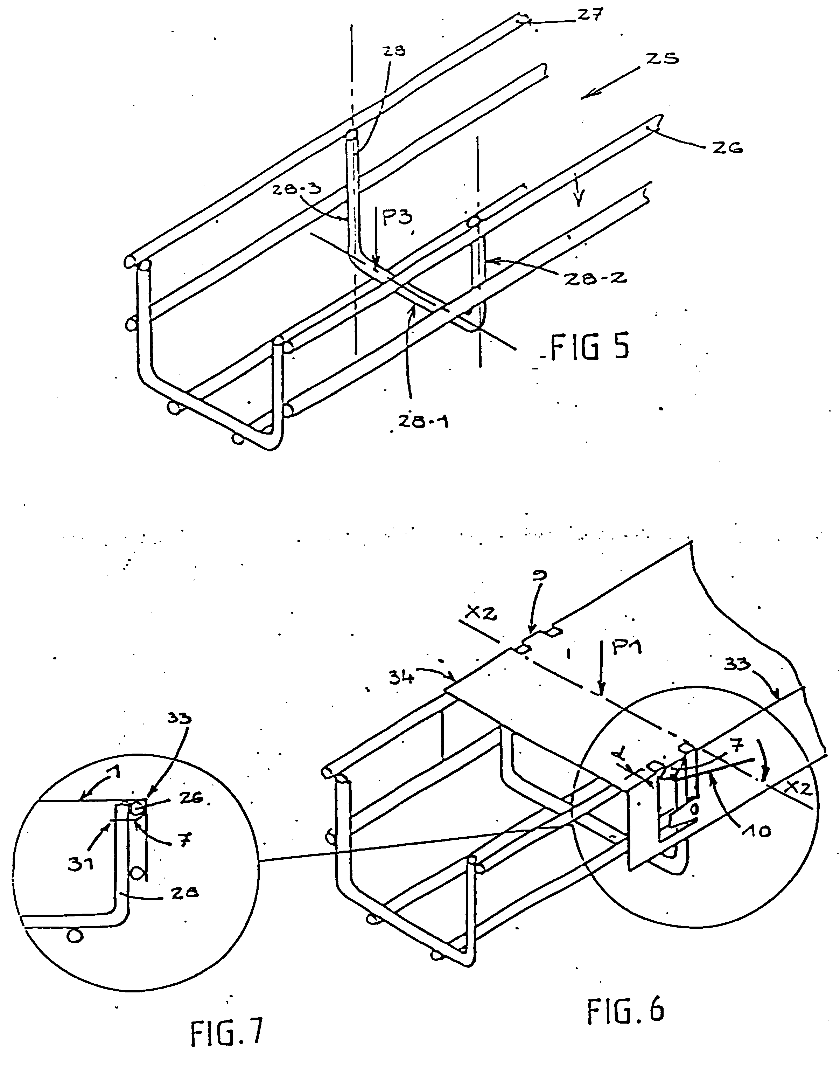

Les figures 5 à 7 concernent la fixation de l'élément de couvercle 1 sur un élément de chemin de câbles en treillis de fils tel que 25. Cet élément est constitué de fils de chaîne tels que 26, 27 parallèles entre eux et parallèles à la direction longitudinale de l'élément 25, et de fils de trame tels que 28 soudés aux fils de chaîne à leurs points de contact.

Les figures 6 et 7 montrent la fixation de l'élément de couvercle 1 sur cet élément de chemin de câbles en treillis de fils 25. On place l'élément de couvercle 1 sur l'élément en treillis 25 de façon à faire coïncider le plan transversal P1 du couvercle 1 avec le plan transversal P3 lequel est perpendiculaire à la direction longitudinale de l'élément en treillis 25 et contient les axes du tronçon horizontal 28-1 et des tronçons verticaux 28-2, 28-3 du fil de trame 28.

On plie ensuite les pattes de fixation 7, 9, allongées transversalement par rapport à la direction longitudinale du couvercle 1, au moyen du levier 10 qu'on engage dans les trous 29, 30. En faisant tourner ces pattes de fixation 7, 9 en direction de l'intérieur autour de la paroi du fil de chaîne correspondant 26, 27, on amène leurs extrémités libres 31, 32 en position de verrouillage.

La figure 7 montre ainsi la patte 7 dont l'extrémité libre 31 a effectué ainsi une rotation d'environ 90° dans un plan perpendiculaire à la direction longitudinale de l'élément de couvercle 1 et parallèle au plan transversal P1.

On obtient ainsi un verrouillage de l'élément de couvercle 1 dans un sens perpendiculaire au plan principal de celui-ci par appui des pattes telles que 7 contre la paroi du fil de chaîne tel que 26 et aussi dans le sens longitudinal, grâce à l'appui des bords latéraux des pattes 7 et 9 contre la paroi du fil de trame 28.

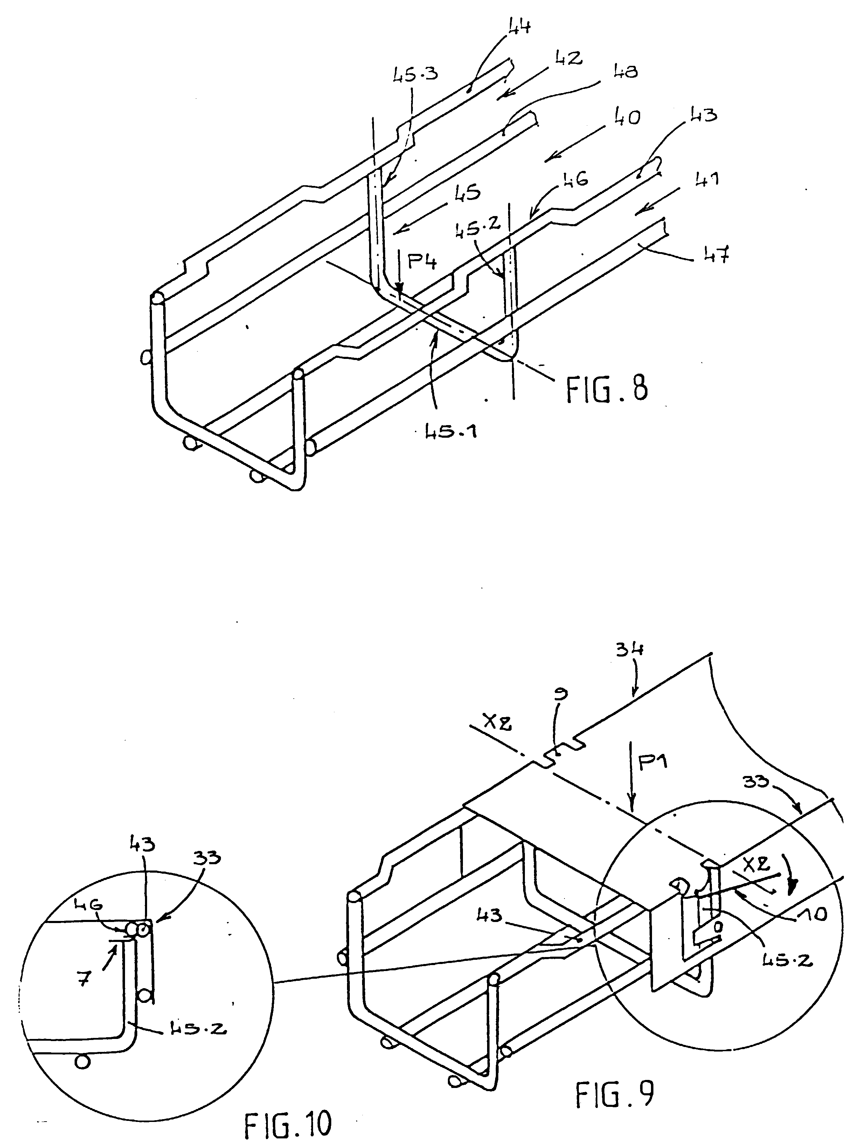

On remarque que, selon les figures 1, 6, 7, la zone de liaison des pattes de fixation transversales 7, 9 avec la paroi du couvercle 1, se trouve dans le plan principal de celui-ci à une distance des arêtes de pliage 33, 34 approximativement égale au diamètre d'un fil de trame. Cette disposition n'est pas nécessaire dans le cas où l'élément en treillis de fils tel que 25 comporte des fils de chaîne rectilignes tels que 26, 27. Pour cette utilisation il suffirait que la zone de liaison de chaque patte de fixation transversale telles que 7, 9 se trouve au voisinage immédiat de l'arête de pliage 33, 34 des bords 4, 5 du couvercle 1. Le placement de cette zone de liaison sur le plan principal du couvercle à une distance "d" des arêtes de pliage 33, 34 approximativement égale au diamètre d'un fil de chaîne permet d'étendre l'utilisation de l'élément de couvercle 1 au recouvrement d'éléments de chemin de câbles en treillis de fils comportant des fils de chaîne ondulés tels que ceux représentés aux figures 8, 9, 10.

On voit figure 8 un élément de chemin de câbles en treillis 40 qui comporte des parois latérales 41, 42 dont les bords supérieurs sont constitués par des fils de chaîne ondulés 43, 44. Chacun de ces fils de chaîne comporte au niveau de chaque fil de trame tel que 45 un tronçon décalé vers l'intérieur tel que 46 qui est soudé en bout sur ce fil de trame. Les autres tronçons de ces fils de chaîne 43, 44 sont sensiblement dans le même plan vertical que les fils de chaîne tels que 47, 48 rectilignes qui sont soudés sur la paroi extérieure des fils de trame tels que 45.

Comme le montrent les figures 9 et 10, on met en place l'élément de couvercle 1 sur l'élément de chemin de câbles en treillis 40 en faisant coïncider le plan transversal P1 du couvercle 1 avec le plan transversal P4 qui contient les axes du tronçon horizontal 45-1 et des tronçons verticaux 45-2 et 45-3 du fil de trame 45.

Il est ainsi possible par pliage des pattes de fixation telles que 7 au moyen du levier 10 engagé dans les trous tels que 29 de faire tourner la patte de fixation 7 autour de la paroi du tronçon 46 du fil de chaîne 43 à partir de sa zone de liaison située sur le plan principal du couvercle 1. Ceci est visible sur la figure 10 où le tronçon de fil de chaîne 46 est indiqué en retrait par rapport au reste du fil de chaîne 43 et où on voit le profil de la patte de fixation 7 en avant du tronçon de fil de trame 45-2.

On comprend que, grâce à ce mode de liaison des pattes de fixation 7 et 9 avec le plan principal du couvercle 1 à une distance "d" de l'arête de pliage 33, 34, approximativement égale au diamètre d'un fil de chaîne, il est possible d'améliorer la liaison du couvercle avec ce fil de chaîne ondulé 43, 44 sans nuire à la qualité de la liaison dans le cas de l'utilisation de fils de chaîne rectilignes.

Comme indiqué plus haut, on peut faire appel à des éléments de couvercle pour chemins de câbles dont les moyens de fixation suivant l'invention ne comportent qu'un seul type de patte de fixation longitudinale ou transversale.

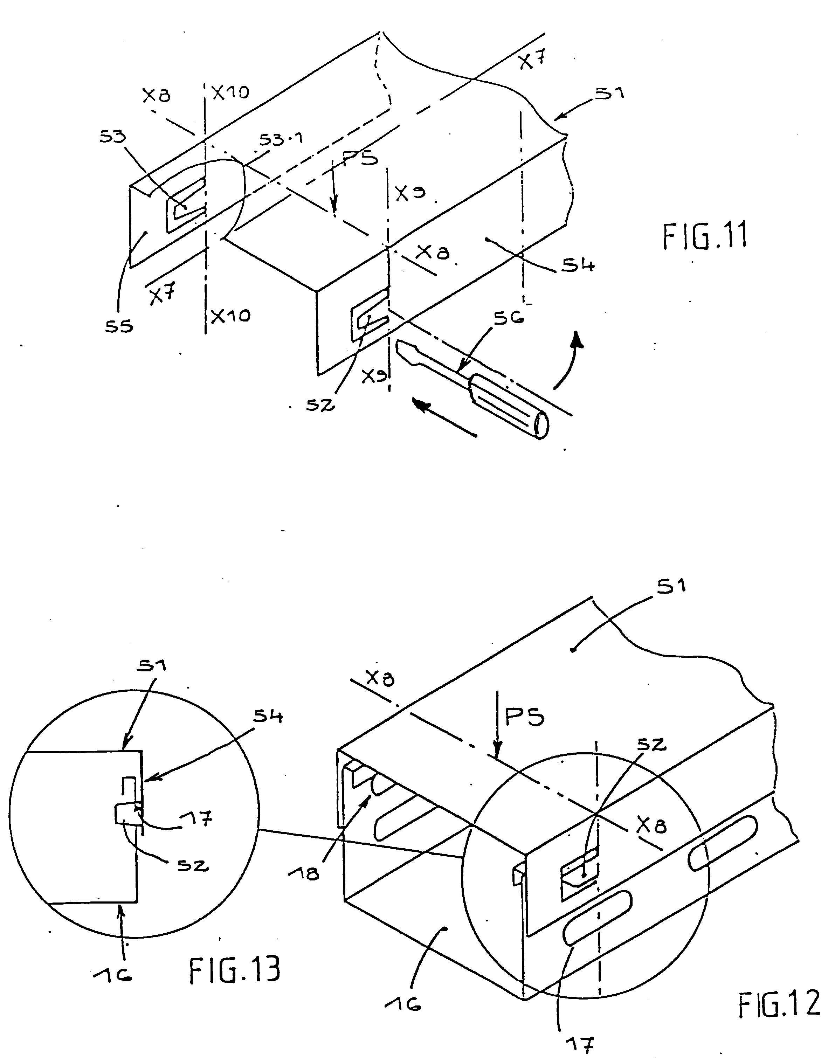

La figure 11 représente un élément de couvercle en tôle 51 comprenant au moins deux pattes de fixation longitudinales 52, 53, découpées respectivement sur les bords 54, 55 de cet élément de couvercle, la patte de fixation 53 étant rendue visible par une découpe 53-1. Ces pattes de fixation sont orientées dans le même sens à partir d'un plan transversal P5 perpendiculaire à l'axe longitudinal X7-X7 de l'élément de couvercle 51 qui intersecte le plan principal de celui-ci en X8-X8 et les bords 54, 55 en X9-X9 et X10-X10. Les pattes de fixation longitudinales 52, 53 ont une forme trapézoïdale comme les pattes de fixation 6, 8 du couvercle 1 (figure 1). Ces pattes sont orientées ici dans le même sens et parallèles à la direction longitudinale de l'élément de couvercle, et ont les mêmes caractéristiques dimensionnelles que celles du couvercle 1. Elles sont donc aptes à s'engager, par pliage, dans les trous 17, 18 de l'élément de chemin de câbles 16 de la figure 2.

Comme le montre la figure 12, on place l'élément de couvercle 51 sur l'élément de chemin de câbles en tôle 16 en faisant correspondre le plan transversal P5 du couvercle 51 avec le plan transversal P2 du chemin de câbles en tôle 16. On ajuste en hauteur, si nécessaire, le couvercle 51 puis on plie vers l'intérieur les pattes de fixation 52, 53 de façon à les engager respectivement dans les trous 17, 18 du chemin de câbles 16.

Comme le montre la figure 13, on plie de préférence sensiblement à environ 90° les pattes de fixation telles que 52, leurs extrémités libres étant engagées à l'intérieur des trous tels que 17 et leurs parties de largeur accrue, proches de leurs zones de liaison avec les bords tels que 54, étant coincées contre les bords des trous tels que 17, au voisinage du milieu de ces trous.

Pour le pliage de ces pattes telles que 52, 53, on peut faire appel comme dans le cas des pattes de fixation 6, 8 de l'élément de couvercle 1 à un levier tel que 10 dont on engage l'extrémité 11 dans des trous adaptés 12, 13 percés à travers ces pattes. On peut aussi, comme le montre la figure 11, utiliser un outil permettant d'exercer directement sur la patte de fixation une poussée suffisante vers l'intérieur pour provoquer sa flexion sans nécessiter un perçage.

Comme le montre la figure 11, on peut utiliser ainsi un tournevis 56 avec lequel on exerce la poussée voulue. Un perçage préalable des pattes de fixation conserve cependant son intérêt pour le démontage éventuel de ces pattes de fixation avec le levier 10.

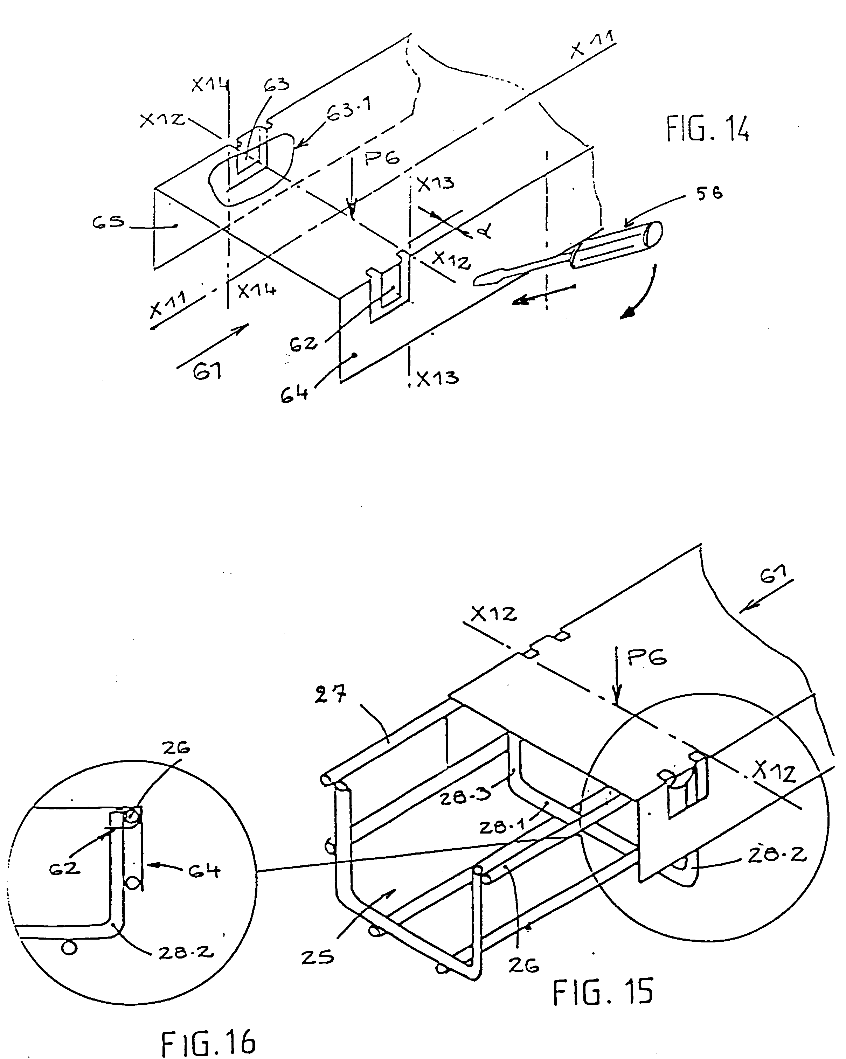

Les figures 14 à 16 montrent un élément de couvercle en tôle comportant seulement des pattes de fixation transversales pour fixation sur un chemin de câbles en treillis de fils.

La figure 14 montre un élément de couvercle en tôle 61 comportant au moins deux pattes de fixation transversales 62, 63, disposées de part et d'autre d'un plan transversal P6, perpendiculaire à l'axe longitudinal X11-X11 qui intersecte le plan principal de ce couvercle en X12-X12 et ses bords latéraux 64, 65 en X13-X13 et X14-X14. La patte de fixation 63 est visible grâce à une découpe 63-1 faite sur la figure 14 à travers le plan principal du couvercle.

Les pattes de fixation transversales 62, 63 ont les mêmes caractéristiques que les pattes de fixation 7, 9 de l'élément de couvercle 1.

Comme le montre la figure 15, ces pattes de fixation transversales 62, 63 permettent la fixation de l'élément de couvercle 61 sur un élément de chemin de câbles en treillis de fils tel que l'élément 25 de la figure 5 ou bien encore l'élément 40 de la figure 8.

Dans le cas de l'élément de chemin de câbles en treillis de fils 25 de la figure 5, celui-ci comporte des fils de chaîne rectilignes 26, 27 et des fils de trame tels que le fil 28 dont le tronçon horizontal 28-1 et les tronçons verticaux 28-2 et 28-3 repliés en U définissent le plan transversal P3.

Comme le montre la figure 15, on place l'élément de couvercle 61 sur l'élément de chemin de câbles 25 en faisant correspondre le plan transversal P6 du couvercle 61 avec le plan P3 de l'élément en treillis de fils 25, puis on plie vers l'intérieur les pattes de fixation 62, 63 de façon à les engager à l'intérieur de l'élément de chemin de câbles 25.

Pour cela, on fait tourner les pattes de fixation autour de la paroi du fil de chaîne correspondant 26, 27 et on amène ainsi ces pattes de fixation en position de verrouillage après une rotation de l'ordre d'environ 90°.

On remarque que la découpe de chaque patte de fixation transversale est effectuée, comme celle des pattes de fixation 7, 9 de façon que le bord latéral de chacune de ces pattes, le plus proche du plan transversal P6 ou P1 de l'élément de couvercle 61 ou 1, soit à une distance de ce plan approximativement égale ou légèrement supérieure au rayon de fil de trame 28 correspondant. Il en résulte qu'au cours du pliage, ce bord latéral de cette patte de fixation vient au voisinage immédiat de ce fil de trame 28. Ainsi, non seulement l'élément de couvercle ne peut plus se séparer de cet élément de chemin de câbles en treillis de fils, mais encore, il ne peut pas non plus glisser longitudinalement.

La figure 16 montre la partie de la patte de fixation transversale 62 après un pliage approximatif d'environ 90° par rapport à sa position initiale réalisé en tournant autour du fil de chaîne 26.

Comme le montrent les figures 14 et 15, la zone de liaison des pattes de fixation transversales 62, 63 avec l'élément de couvercle 61 se trouve dans le plan principal de celui-ci, à une distance "d" des arêtes de pliage des bords 64, 65 approximativement égale au diamètre d'un fil de trame ou peu supérieure. Cette caractéristique est déjà indiquée en ce qui concerne les pattes de fixation transversales représentées figure 1. Cette disposition n'est pas nécessaire dans le cas où le chemin de câbles en treillis de fils comporte, dans la zone de rive, des fils de chaîne tels que les fils 26, 27 (voir figure 5) qui sont rectilignes et soudés sur la paroi latérale des fils de trame.

Elle améliore, par contre, de façon importante la tenue des pattes de fixation transversales lorsque les fils de chaîne dans la zone de rive sont ondulés tels que les fils 43, 44 de l'élément de chemin de câbles 40. Ces fils comportent des tronçons en retrait vers l'intérieur tels que 46, (voir figure 8) soudés en bout sur les tronçons verticaux tels que 45-2 des fils de trame tels que 45.

Le pliage des pattes transversales 62, 63 peut être effectué comme celui des pattes transversales 7, 9 au moyen d'un levier tel que 10 dont l'extrémité 11 est engagée dans un trou de diamètre adapté tel que 29, 30 (voir figure 1). Ce pliage peut aussi être effectué par tout outil permettant d'exercer une pression suffisante sur la partie libre de la patte de fixation, en direction de l'intérieur. On peut ainsi utiliser, comme à la figure 11, un tournevis 56 qui permet de se dispenser du perçage de la patte de fixation.

Comme on l'a précisé plus haut dans le cas des groupes de pattes de fixation comportant à la fois une patte longitudinale et une patte transversale, chaque élément de couvercle comportant des pattes de fixation soit transversales, soit longitudinales, est équipé de plusieurs ensembles de deux pattes de fixation situés de part et d'autre d'un plan transversal. La distance entre ces ensembles est déterminée en fonction de la distance de base entre deux trous tels que 17, 18 dans le cas d'un chemin de câbles en tôle, ou bien entre deux fils de trame tels que 28 ou 45 dans le cas d'un chemin de câbles en treillis de fils.

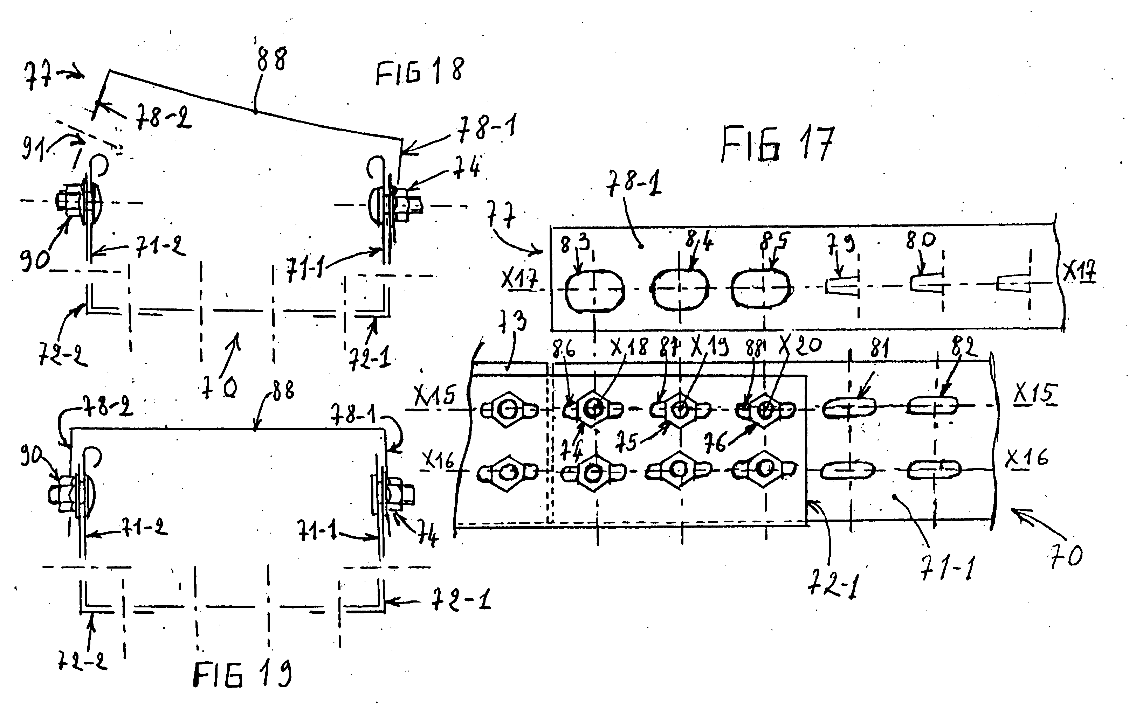

La figure 17 est une vue schématique partielle en élévation de la zone d'extrémité de la paroi latérale 71-1 d'un élément de chemin de câbles 70 en tôle, lequel est assemblé au moyen de deux éclisses cornières 72-1, 72-2, seule la première étant visible sur la figure 17, bout à bout avec l'extrémité correspondante 73 d'une des deux parois latérales d'un deuxième élément de chemin de câbles. Les parois latérales 71-1 et 73 comportent deux lignes de trous allongés suivant les axes X15-X15, X16-X16 parallèles à la direction longitudinale de ces chemins de câbles. Des boulons dont les écrous tels que 74, 75, 76 sont visibles, solidarisent les éclisses telles que 72-1 avec les parois latérales telles que 71-1. Au-dessus de l'élément de chemin de câbles 70 est représenté l'élément de couvercle en tôle 77 dont seul un bord latéral 78-1 est représenté dans le plan de la figure 17. Cet élément comporte, comme décrit plus haut, et comme représenté aux figures 11 à 13 des pattes longitudinales telles que 79, 80, disposées suivant un axe X17-X17, de forme trapézoïdale aptes à venir s'engager dans les trous allongés tels que 81, 82.

L'autre bord du couvercle, non représenté, est également muni de pattes semblables qui peuvent être orientées dans le même sens ou en sens opposé. A chaque extrémité de chaque bord latéral sont prévus trois trous tels que 83, 84, 85 disposés suivant l'axe X17-X17 et espacés de façon à se trouver en regard des trous correspondants, réalisés sur l'autre bord latéral et disposés également de façon que, par mise en place du couvercle sur le chemin de câbles de même longueur, les écrous tels que 74, 75, 76 puissent traverser les trous tels que 83, 84, 85.

Pour obtenir ce résultat on donne aux trous tels que 83, 84, 85 une hauteur, mesurée dans le sens perpendiculaire à X17-X17 au moins égale au diamètre du cercle circonscrit aux écrous 74, 75, 76. On donne également à ces trous une longueur mesurée suivant X17-X17 suffisante pour permettre un faible écart entre les axes des écrous 74, 75, 76 et les axes X18, X19, X20 des trous longitudinaux 86, 87, 88.

Les figures 18 et 19 montrent, de façon purement schématique, le procédé de mise en place de l'élément de couvercle 77 sur l'élément de chemin de câbles 70.

Comme le montre la figure 18, on incline d'abord l'élément de couvercle 77 du côté de son bord latéral 78-1 pour engager les trous tels que 83 situés à chaque extrémité de ce bord sur les écrous tels que 74, 90 qui assurent la liaison entre les parois latérales 71-1, 71-2 et les éclisses cornières telles que 72-1, 72-2 dont les autres extrémités sont solidaires des parois latérales telles que 73 d'un autre élément de chemin de câbles disposé bout à bout avec l'élément de chemin de câbles 70.

On voit figure 18 qu'une faible déformation élastique de la paroi supérieure 88 du couvercle 77 permet, après mise en place du bord latéral 78-1, de faire passer le deuxième bord 78-2 au-dessus des écrous tels que 90 jusqu'à engagement de ceux-ci dans les trous correspondants tels que 91.

On voit figure 19 le résultat obtenu après emboîtement de chacune des parois latérales de l'élément de chemin de câbles 70 dans le couvercle 77.

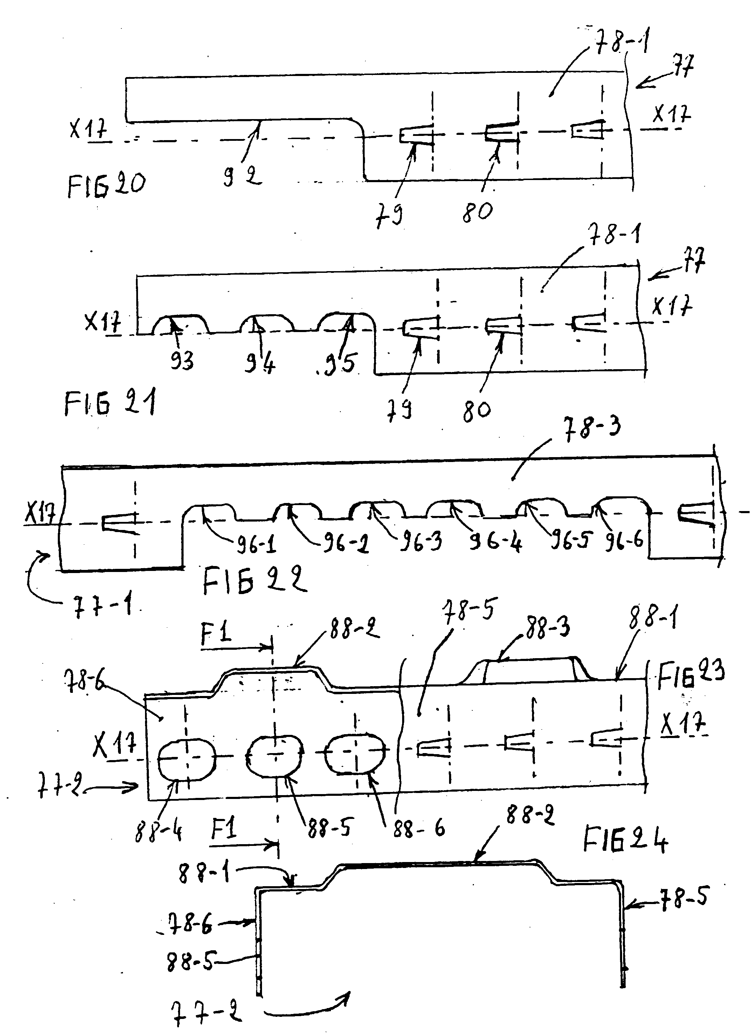

Au lieu d'utiliser des trous tels que 83, 84, 85, 91, on peut se contenter de réaliser une découpe 92, comme le montre la figure 20, de chaque bord latéral tel que 78-1 du couvercle 77. Cette découpe 92 permet la mise en place du couvercle sur un élément de chemin de câbles tel que 70 avec mise en coïncidence de l'axe X17-X17 avec l'axe X15-X15 qui traverse chacun des trous allongés tels que 81-82 de la paroi latérale 71-1. Cette position du couvercle est donc celle qui permet d'engager les pattes de fixation telles que 79, 80 dans ces trous tels que 81, 82. Le bord de la découpe 92 est calculé pour tangenter dans ces conditions le bord supérieur des trous tels que 83, 84 85 représentés à la figure 17. Ceci veut dire que ce bord est au plus tangent aux écrous tels que 74, 75, 76. On évite ainsi toute déformation du couvercle ou des bords latéraux de celui-ci au moment de sa mise en place.

On peut en variante réaliser des découpes partielles telles que, par exemple 93, 94, 95, comme le montre la figure 21. Dans le cas de cet exemple, on a limité la hauteur de découpe au niveau correspondant à celui-ci de l'axe X17-X17 et on a conservé la moitié supérieure des trous tels que 83, 84, 85. Une telle disposition peut faciliter la mise en place du couvercle 77 sur le chemin de câbles tel que 70, car en posant le couvercle horizontalement sur le chemin de câbles, les écrous s'introduisent chacun dans son emplacement et il ne reste plus qu'à engager chaque patte de fixation telle que 79, 80 dans le trou correspondant 81, 82.

Comme montré à la figure 22, on peut placer un couvercle 77-1 non pas en coïncidence avec un élément de chemin de câbles mais à cheval sur deux éléments. Dans ce cas, la zone où se trouvent les éclisses sera déplacée et, par exemple, se trouvera dans la région médiane du couvercle. Chacun des deux bords latéraux de ce couvercle tel que 78-3 comportera donc, dans une zone, par exemple, proche de son milieu, le nombre de trous nécessaire pour recevoir les écrous des boulons reliant les éclisses aux parois latérales des deux chemins de câbles.

Dans le cas de cette figure 22, le bord latéral visible tel que 78-3 correspond à une série de six découpes 96-1 à 96-6 permettant de recevoir les six écrous des deux éléments de chemin de câbles à assembler. Les pattes de fixation sont disposées avantageusement sur toute la longueur restante du bord latéral de chaque côté de celui-ci. Le deuxième bord latéral a la même disposition. Ici aussi, il est possible de remplacer les découpes telles que celle de la figure 22 par des trous tels que ceux de la figure 17 ou une découpe telle que celle de la figure 20.

Les figures 23 et 24 concernent un élément de couvercle en tôle 77-2 dont le plan principal 88-1 est renforcé par des nervures transversales telles que 88-2, 88-3. Ces nervures sont réalisées par emboutissage et sont déformées à partir de l'intérieur afin d'être en saillie vers l'extérieur pour ne pas réduire la section de passage des câbles. La hauteur de ces nervures est d'environ 10 à 15 % de la hauteur du chemin de câbles pourvu de son couvercle. La largeur et le pas de ces nervures peuvent varier dans de larges limites et dépendent du degré de rigidité qu'on se propose de réaliser. Les bords latéraux 78-5, 78-6 peuvent comporter, comme le montrent les figures 20 et 21, des découpes de divers types au lieu des trous 88-4, 88-5, 88-6, semblables à ceux de la figure 17. On peut ainsi combiner ces nervures avec une structure de bords latéraux telle que celle représentée à la figure 22.

Comme le montre la figure 24 qui est une coupe transversale de la figure 23, vue suivant F1, on peut limiter la longueur des nervures 88-2, 88-3 afin de conserver une certaine élasticité au niveau des bords latéraux 78-5, 78-6 pour pouvoir mettre en place le couvercle sur l'élément de chemin de câbles par déformation élastique comme le montre la figure 18.

Ces exemples montrent que de nombreuses variantes ou adaptations peuvent être réalisées concernant l'élément de couvercle et son moyen de fixation suivant l'invention ainsi que son procédé de mise en oeuvre. Ces variantes ou adaptations ne sortent pas du domaine de l'invention telle que définie par les revendications.

## Revendications

1. Elément de couvercle (1) en tôle monté sur un élément de chemin de câbles (16, 25), cet élément de chemin de câbles (16, 25) ayant une section transversale en U et comportant des passages latéraux (18) à travers ses parois latérales (19, 20, 41, 42), l'élément de couvercle comportant deux bords latéraux (4, 5) à l'intérieur desquels sont emboîtés les extrémités des parois latérales (19, 20) du chemin de câble (16) caractérisé en ce que l'élément de couvercle (1) comporte comme moyen de fixation sur l'élément de chemin de câbles (16, 25) de chaque côté (4, 5) au moins une patte de fixation (6, 7, 8, 9) découpée dans sa paroi et solidaire de celle-ci par l'une de ses extrémités, l'autre extrémité (14, 15, 31, 32) étant libre, la patte (6, 7, 8, 9) étant apte à partir d'une position initiale dans le plan d'un bord latéral (4, 5), à être pliée en engageant son extrémité libre (14, 15, 31, 32) à l'intérieur d'un passage latéral de l'élément de chemin de câbles (16, 25) de façon à réaliser un appui localisé de la patte contre une zone déterminée (17, 26, 46) de la paroi latérale (19, 20) de l'élément de chemin de câbles (16, 25).

2. Elément de couvercle et élément de chemin de câbles suivant revendication 1 caractérisé en ce que le chemin de câbles est un chemin de câbles en tôle (16) et en ce que l'élément de couvercle (1) comporte, découpée dans chacun de ses deux bords latéraux au moins une patte de fixation (6, 8) allongée parallèlement à la direction longitudinale du couvercle, chaque patte de fixation étant apte à se replier vers l'intérieur en se déplaçant dans un plan sensiblement parallèle à la direction longitudinale du bord du couvercle et perpendiculaire au plan de ce bord pour venir s'engager dans un passage constitué par un trou (17, 18) réalisé dans la paroi latérale (19, 20) de l'élément de chemin de câbles en tôle (16) et placé en regard de la patte de fixation, les différentes pattes de fixation étant soit orientées dans le même sens, soit orientées en sens opposé.

3. Elément de couvercle et élément de chemin de câbles suivant revendication 2 caractérisé en ce que la patte de fixation (6, 8) a sensiblement la forme d'un trapèze dont la petite base qui se trouve au voisinage de l'extrémité libre (14, 15) a une largeur inférieure à celle du trou (17, 18) dans lequel elle doit s'engager et dont la grande base, située au voisinage de l'extrémité solidaire du bord du couvercle (4, 5) a une largeur suffisante pour que les bords de la patte de fixation après engagement dans le trou de la patte de fixation coopèrent avec les bords de ce trou pour assurer le blocage du couvercle.

4. Elément de couvercle et élément de chemin de câbles suivant revendication 2 ou 3 caractérisé en ce que chaque élément de chemin de câbles en tôle (16) comporte de chaque côté au moins un trou allongé (17, 18) de largeur (1) sensiblement constante et orienté parallèlement à la direction longitudinale du chemin de câbles, les deux trous allongés se trouvant en face l'un de l'autre et ayant une longueur (L) au moins double de celle d'une patte de fixation (6, 8) deux pattes de fixation aptes à s'engager chacune dans un trou, étant orientées dans des sens opposés, les extrémités de celles-ci solidaires chacune d'un bord du couvercle se trouvant sensiblement dans un même plan transversal (P1) perpendiculaire à la direction longitudinale (X1-X1) de l'élément de couvercle lequel est placé sur l'élément de chemin de câbles en tôle de façon que ce plan transversal (P1) intersecte les deux trous allongés (17, 18) par le milieu.

5. Elément de couvercle et élément de chemin de câbles suivant revendication 1 caractérisé en ce que le chemin de câbles est un chemin de câbles en treillis de fils (40) et en ce que l'élément de couvercle (1) comporte au moins une patte de fixation (7, 9) de chaque côté, orientée transversalement par rapport à la direction longitudinale (X1-X1) de l'élément de couvercle (1), dont au moins l'extrémité libre (31, 32) se trouve dans le plan du bord (4, 5) correspondant de l'élément de couvercle, cette patte de fixation étant apte à coopérer par pliage vers l'intérieur des passages latéraux avec une zone déterminée de la paroi de l'élément de chemin de câbles, son mouvement de pliage s'effectuant dans un plan sensiblement perpendiculaire à la direction longitudinale (X1-X1) de l'élément de couvercle de façon à venir en appui contre la paroi latérale d'un élément de chemin de câbles.

6. Elément de couvercle et élément de chemin de câbles suivant la revendication 5 caractérisé en ce que l'élément de chemin de câble contre lequel la patte de fixation vient en appui est un fil de chaîne.

7. Elément de couvercle et élément de chemin de câbles suivant la revendication 5 ou 6 caractérisé en ce que l'élément de couvercle comporte au moins deux pattes de fixation (7, 9) situées sur des bords opposés (4, 5) du couvercle (1) et orientées transversalement par rapport à la direction longitudinale (X1-X1) de l'élément de couvercle, ces deux pattes de fixation étant décalées l'une par rapport à l'autre de façon à se trouver de part et d'autre d'un plan transversal (P1) perpendiculaire à la direction longitudinale et étant aptes à venir par pliage chacune en appui contre la paroi latérale en laissant entre elles un passage suffisant pour un fil de trame (28-2, 28-3).

8. Elément de couvercle et élément de chemin de câbles suivant revendication 1 caractérisé en ce que l'élément de couvercle comporte, découpé dans chacun de ses deux bords latéraux l'un au-dessus de l'autre,au moins un groupe (2, 3) de deux pattes de fixation comprenant une patte de fixation longitudinale (6, 8) parallèle à la direction longitudinale (X1-X1) de l'élément de couvercle (1) et une patte de fixation transversale (7, 9), orientée perpendiculairement à la première, les deux pattes de fixation situées d'un côté du couvercle étant décalées par rapport à celles situées de l'autre côté du couvercle de façon à se trouver de part et d'autre d'un plan transversal (P1) perpendiculaire à la direction longitudinale de l'élément de couvercle.

9. Elément de couvercle et élément de chemin de câbles suivant revendication 8 caractérisé en ce que l'élément de couvercle comporte à intervalles déterminés sur sa longueur plusieurs groupes (2, 3) de deux pattes de fixation orientées l'une longitudinalement, l'autre transversalement par rapport à la direction longitudinale (X1-X1) de l'élément de couvercle, chaque groupe situé sur un bord du couvercle étant décalé par rapport à un autre groupe situé sur l'autre bord du couvercle au voisinage immédiat d'un plan transversal (P1) perpendiculaire à la direction longitudinale de l'élément de chemin de câbles, de part et d'autre de celui-ci.

10. Elément de couvercle et élément de chemin de câbles suivant l'une des revendications 5 à 9 caractérisé en ce que chaque patte de fixation transversale (7, 9) est découpée de façon que ses bords latéraux se prolongent au-delà des arêtes de pliage (33, 34) des bords (4, 5) du couvercle (1), la zone de liaison de ces pattes transversales avec le couvercle étant ainsi réalisée sur la surface principale de celui-ci.

11. Elément de couvercle et élément de chemin de câbles suivant revendication 10 caractérisé en ce que les bords latéraux de chaque patte de fixation transversale (7, 9) se prolongent sur la surface principale du couvercle jusqu'à une distance "d" des arêtes de pliage (33, 34) approximativement égale au diamètre d'un fil de chaîne pour faciliter le pliage de ces pattes transversales autour d'un tronçon (46) de fil de chaîne ondulé (43) soudé en bout sur un fil de trame (28-2).

12. Elément de couvercle et élément de chemin de câbles suivant l'une des revendications 1 à 11 caractérisé en ce qu'au moins une patte de fixation (6, 8, 7, 9) est munie d'un trou (12, 13, 29, 30), de dimensions adaptées à l'introduction de l'extrémité d'une tige formant levier (10), apte à plier par un mouvement de rotation la patte de fixation pour engager son extrémité libre à l'intérieur de l'élément de chemin de câbles (16, 25, 40).

13. Elément de couvercle et élément de chemin de câbles suivant revendication 12 caractérisé en ce qu'une tige formant levier (10) est introduite dans ledit trou (12,13,29,30) et est coudée, pour permettre un déplacement angulaire accru.

14. Elément de couvercle (77) et élément de chemin de câbles suivant l'une des revendications 2 à 4 caractérisé en ce que chacun des deux bords latéraux (78-1, 78-2) de ce couvercle (77) comporte au moins un trou (83) ou découpe (92, 93) situé en regard d'un trou correspondant (91) de l'autre bord latéral, ces trous ou découpes ayant une section suffisante pour le passage d'un écrou d'un boulon d'assemblage permettant de réaliser la liaison bout à bout par au moins une éclisse (72-1) entre au moins une paroi latérale (71-1) de cet élément de chemin de câbles en tôle (70) et la paroi latérale correspondante (73) d'au moins un autre élément de chemin de câble en tôle à l'une de ses extrémités, ces trous ou découpes étant placés de façon à pouvoir être traversés, au moment de la mise en place du couvercle par des écrous des boulons assurant la liaison entre les éclisses et les parois latérales correspondantes du chemin de câble, écrous situés au niveau des trous (83) ou découpes des bords latéraux du couvercle (77) lorsque celui-ci est en place sur l'élément de chemin de câbles.

15. Elément de couvercle (77) et élément de chemin de câbles suivant revendication 14 caractérisé en ce que les trous (83) réalisés sur les bords latéraux du couvercle ont une forme allongée parallèlement à l'axe longitudinal du couvercle et ont une largeur transversale au moins égale au diamètre du cercle circonscrit aux écrous (74) utilisés pour le boulonnage des éclisses (72-1).

16. Elément de couvercle et élément de chemin de câbles suivant revendication 14 ou 15 caractérisé en ce que l'élément de couvercle a une longueur égale à celle d'un élément de chemin de câbles en tôle (70) sur lequel il vient s'emboîter et que les trous (83) réalisés sur les bords latéraux du couvercle sont situés en extrémités du couvercle, les trous (83) étant en nombre suffisant pour s'engager autour des boulons de fixation des éclisses.

17. Elément de couvercle (77) et élément de chemin de câbles suivant la revendication 14 caractérisé en ce que les deux bords latéraux (78-1) de l'élément de couvercle comportent des découpes (92) qui réduisent la hauteur de ces bords de façon telle qu'ils ne recouvrent pas les écrous (74, 75, 76) des boulons utilisés pour la fixation des éclisses (72-1) aux parois latérales (78-1) des éléments de chemin de câbles.

18. Elément de couvercle (77) et élément de chemin de câbles suivant la revendication 17 caractérisé en ce que les découpes sont constituées de plusieurs découpes (93, 94, 95) séparées, aptes à entourer chacune partiellement les écrous (74, 75, 76) des boulons utilisés pour l'assemblage des éclisses (72-1).

19. Elément de couvercle et élément de chemin de câbles suivant la revendication 14 caractérisé en ce que les trous ou découpes réalisés dans les bords latéraux (78-3) des éléments de couvercle (77-1) sont disposés dans un zone courante de ces bords latéraux de façon à pouvoir placer l'élément de couvercle à cheval sur deux éléments de chemin de câbles assemblés bout à bout par des éclisses.

20. Elément de couvercle en tôle et élément de chemin de câbles suivant l'une des revendication 1 à 19 caractérisé en ce que l'élément de couvercle comporte des nervures transversales.

21. Procédé de fixation d'un élément de couvercle en tôle sur un élément de chemin de câbles en tôle métallique (16) ou en treillis de fils métalliques (25, 40) ayant une section transversale en U et comportant des passages, à travers ses deux parois latérales, constitués par des trous (17, 18) dans le cas des éléments de chemins de câbles en tôle métallique ou par les intervalles limités par les fils de chaîne (46, 47) et de trame (45-2) des éléments de chemins de câbles en treillis de fils métalliques, caractérisé en ce qu'on découpe dans une bande de tôle de longueur et largeur adaptées, au moyen d'un outil convenable, au voisinage de chaque bord longitudinal de cette bande, au moins un moyen de fixation constitué par au moins une patte de fixation (6, 8, 7, 9) puis en ce qu'on effectue le pliage sensiblement à angle droit des bords latéraux (4, 5) de la bande suivant les arêtes de pliage (33, 34) parallèles à l'axe longitudinal de la bande, puis en ce qu'on emboîte les parois latérales (19, 20, 41, 42) de l'élément de chemin de câbles à l'intérieur des bords latéraux (4, 5) de l'élément de couvercle (1) ainsi réalisé, de façon que l'extrémité libre d'au moins une patte de fixation (6, 8, 7, 9) sur chaque bord du couvercle soit en regard d'un passage à travers la paroi latérale correspondante de l'élément de chemin de câbles, puis en ce qu'on plie cette extrémité libre de façon à l'engager à l'intérieur de l'élément de chemin de câbles en réalisant ainsi une liaison entre celui-ci et l'élément de couvercle.

## Patentansprüche

1. Deckelelement (1) aus Blech, das auf einem Kabelkanalelement (16, 25) angebracht ist, wobei dieses Kabelkanalelement (16, 25) einen U-förmigen Querschnitt hat und seitliche Durchlässe (18) durch seine Seitenwände (19, 20, 41, 42) hindurch aufweist, und das Deckelelement zwei seitliche Ränder (4, 5) aufweist, innerhalb deren die Enden der Seitenwände (19, 20) des Kabelkanals (16) eingefügt sind, dadurch gekennzeichnet, daß das Deckelelement (1) als Mittel zur Befestigung auf dem Kabelkanalelement (16, 25) auf jeder Seite (4, 5) mindestens eine Befestigungsklaue (6, 7, 8, 9) aufweist, die aus seiner Wand ausgeschnitten und fest mit dieser durch eines ihrer Enden verbunden ist, während das andere Ende (14, 15, 31, 32) freiliegt, wobei die Klaue (6, 7, 8, 9) dazu eingerichtet ist, von einer Ausgangslage in der Ebene eines Seitenrandes (4, 5) aus umgebogen zu werden, und sie mit ihrem freien Ende (14, 15, 31, 32) im Inneren eines seitlichen Durchlasses des Kabelkanalelements (16, 25) derart eingreift, daß ein örtliches Anliegen der Klaue an einer bestimmten Zone (17, 26, 46) der Seitenwand (19, 20) des Kabelkanalelements (16, 25) erzielt ist.

2. Deckelelement und Kabelkanalelement nach Anspruch 1, dadurch gekennzeichnet, daß der Kabelkanal ein Kabelkanal aus Blech (16) ist, und daß beim Deckelelement (1) aus jedem seiner seitlichen Ränder mindestens eine längliche Befestigungsklaue (6, 8) ausgeschnitten ist, die sich parallel zur Längsrichtung des Deckels erstreckt, wobei jede Befestigungsklaue dazu eingerichtet ist, sich zur Innenseite hin umbiegen zu lassen, wobei sie sich in einer Ebene, die sich im wesentlichen parallel zur Längsrichtung des Deckelrandes erstreckt, und senkrecht zur Ebene dieses Randes versetzt, um zum Eingriff in einen Durchlaß zu gelangen, der von einem Loch (17, 18) gebildet ist, das in der Seitenwand (19, 20) des Kalbelkanalelements aus Blech (16) ausgebildet ist und der Befestigungsklaue gegenüberliegend angeordnet ist, und wobei die verschiedenen Befestigungklauen entweder in derselben Richtung oder in Gegenrichtung ausgerichtet sind.

3. Deckelelement und Kabelkanalelement nach Anspruch 2, dadurch gekennzeichnet, daß die Befestigungsklaue (6. 8) im wesentlichen die Form eines Trapezes hat, dessen kleine Basis sich in der Nähe des freien Endes (14, 15) befindet und eine Breite aufweist, die kleiner ist als die des Lochs (17, 18), in das sie eingreifen soll, und dessen große Basis, die in der Nähe des fest mit dem Deckelrand (4, 5) verbundenen Endes gelegen ist, eine Breite aufweist, die ausreicht, damit die Ränder der Befestigungsklaue nach dem Eingriff der Befestigungsklaue in das Loch mit den Rändern dieses Loches zusammenwirken, um die feste Halterung des Deckels sicherzustellen.

4. Deckelelement und Kabelkanalelement nach Anspruch 2 oder 3, dadurch gekennzeichnet, daß jedes Kabelkanalelement aus Blech (16) auf jeder Seite mindestens ein Langloch (17, 18) mit einer Breite (1) aufweist, die im wesentlichen konstant ist, und das parallel zur Längsrichtung des Kabelkanals ausgerichtet ist, wobei die beiden Langlöcher einander gegenüberliegen und eine Länge (L) aufweisen, die mindestens das Doppelte der einer Befestigungsklaue (6, 8) beträgt, wobei zwei Befestigungsklauen dazu eingerichtet sind, jeweils in ein Loch einzugreifen, in entgegengesetzten Richtungen ausgerichtet sind und sich mit ihren Enden, die mit einem Dekkelrand fest verbunden sind, im wesentlichen in derselben Querebene (P1) befinden, die senkecht zur Längsrichtung (X1-X1) des Deckelelements steht, das auf dem Kabelkanalelement aus Blech derart aufgesetzt ist, daß diese Querebene (P1) die beiden Langlöcher (17, 18) durch die Mitte schneidet.

5. Deckelelement und Kabelkanalelement nach Anspruch 1, dadurch gekennzeichnet, daß der Kabelkanal ein Kabelkanal aus einem Drahtnetz (40) ist, und daß das Deckelelement (1) mindesten eine Befestigungsklaue (7, 9) an jeder Seite aufweist, die in Bezug auf die Längsrichtung (X1-X1) des Dekkelelements (1) quer ausgerichtet ist, von der sich mindestens das freie Ende (31, 32) in der Ebene des entsprechenden Randes (4, 5) des Deckelelements befindet, wobei diese Befestigungsklaue dazu eingerichtet ist, durch Umbiegen nach innen durch seitliche Durchlässe mit einer bestimmten Zone der Wand des Kabelkanalelements zusammenzuwirken, wobei ihre Biegebewegung in einer Ebene erfolgt, die im wesentlichen senkrecht zur Längsrichtung (X1-X1) des Deckelelements steht, und zwar derart, daß sie gegen die Seitenwand eines Kabelkanalelements zur Anlage gelangt.

6. Deckelelement und Kabelkanalelement nach Anspruch 5, dadurch gekennzeichnet, daß das Element des Kabelkanals, gegen das die Befestigungsklaue zur Anlage gelangt, ein Kettfaden bzw. -draht ist.

7. Deckelelement und Kabelkanalelement nach Anspruch 5 oder 6, dadurch gekennzeichnet, daß das Deckelelement mindestens zwei Befestigungsklauen (7, 9) aufweist, die auf den gegenüberliegenden Rändern (4, 5) des Deckels (1) gelegen sind und in Bezug auf die Längsrichtung (X1-X1) des Deckelelements in Querrichtung ausgerichtet sind, wobei diese beiden Befestigungsklauen zueinander derart versetzt sind, daß sie sich beiderseits einer Querebene (P1) befinden, die senkrecht zur Längsrichtung steht, und dazu eingerichtet sind, jeweils durch Umbiegen in Anlage gegen die Seitenwand zu gelangen, indem sie zwischeneinander einen Durchlaß belassen, der für den Schußfaden (28-2, 28-3) bzw. -draht ausreicht.

8. Deckelelement und Kabelkanalelement nach Anspruch 1, dadurch gekennzeichnet, daß das Deckelelement, übereinanderliegend aus jedem seiner beiden Seitenränder ausgeschnitten, mindestens eine Gruppe (2, 3) aus zwei Befestigungsklauen aufweist, die eine Längs-Befestigungsklaue (6, 8) aufweisen, die parallel zur Längsrichtung (X1-X1) des Deckelelements (1) verläuft, sowie eine Quer-Befestigungsklaue (7, 9), die senkrecht zur ersten ausgerichtet ist, und daß die beiden Befestigungsklauen, die auf der einen Seite des Deckels gelegen sind, in Bezug auf die, die auf der anderen Seite des Deckels gelegen sind, derart versetzt sind, daß sie sich beiderseits einer Querebene (P1) senkrecht zur Längsrichtung des Deckelelements befinden.

9. Deckelelement und Kabelkanalelement nach Anspruch 8, dadurch gekennzeichnet, daß das Deckelelement unter bestimmten Abständen über seine Länge hinweg mehrere Gruppen (2, 3) aus zwei Befestigungsklauen aufweist, von denen in Bezug auf die Längsrichtung (X1-X1) des Deckelelements die eine in Längsrichtung, die andere in Querrichtung ausgerichtet ist, wobei jede Gruppe, die auf einem Rand des Deckels gelegen ist, in Bezug auf eine andere Gruppe, die auf dem anderen Rand des Deckels gelegen ist, in der unmittelbaren Nähe einer Querebene (P1), die senkrecht zur Längsrichtung des Kabelkanalelements verläuft, sowie beiderseits dieser versetzt ist.

10. Deckelelement und Kabelkanalelement nach einem der Ansprüche 5 bis 9, dadurch gekennzeichnet, daß jede Quer-Befestigungsklaue (7, 9) derart ausgeschnitten ist, daß sich ihre seitlichen Ränder über die Biegekanten (33, 34) der Ränder (4, 5) des Deckels (1) hinaus verlängern, so daß die Zone der Verbindung dieser Quer-Klauen mit dem Deckel auf dessen Hauptfläche gebildet ist.

11. Deckelelement und Kabelkanalelement nach Anspruch 10, dadurch gekennzeichnet, daß die seitlichen Ränder einer jeden Quer-Befestigungsklaue (7, 9) sich auf der Hauptfläche des Deckels bis zu einem Abstand "d" von den Biegekanten (33, 34) verlängern, der etwa gleich ist dem Durchmesser eines Kettfadens bzw. -drahtes, um das Umbiegen dieser Quer-klauen rund um ein Stück (46) eines gewellten Kettfadens (43) bzw. -drahtes zu erleichtern, der auf einem Schußfaden (28-2) bzw. -draht stumpf angeschweißt ist.

12. Deckelelement und Kabelkanalelement nach einem der Ansprüche 1 bis 11, dadurch gekennzeichnet, daß mindestens eine Befestigungsklaue (6, 8, 7, 9) mit einem Loch (12, 13, 29, 30) mit Abmessungen versehen ist, die zum Einführen des Endes einer Stange eingerichtet sind, die einen Hebel (10) bildet, der dazu geeignet ist, durch eine Drehbewegung die Befestigungsklaue umzubiegen, um ihr freies Ende im Inneren des Kabelkanalelements (16, 25, 40) in Eingriff zu bringen.

13. Deckelelement und Kabelkanalelement nach Anspruch 12, dadurch gekennzeichnet, daß eine Stange, die einen Hebel (10) bildet, in das genannte Loch (12, 13, 29. 30) eingeführt und abgewinkelt wird, um eine vergrößerte winklige Versetzung zu gestatten.

14. Deckelelement (77) und Kabelkanalelement nach einem der Ansprüche 2 bis 4, dadurch gekennzeichnet, daß jeder der beiden Seitenränder (78-1, 78-2) dieses Deckels (77) mindestens ein Loch (83) oder einen Einschnitt (92, 93) aufweist, der einem entsprechenden Loch (91) des anderen Seitenrandes gegenüberliegend gelegen ist, wobei diese Löcher oder Einschnitte einen Querschnitt aufweisen, der für den Durchtritt der Mutter einer Montageschraube ausreicht, die es gestattet, die endweise Verbindung durch mindestens eine Lasche (72-1) zwischen mindestens einer Seitenwand (71-1) dieses Kabelkanalelements aus Blech (70) und der entsprechenden Seitenwand (73) mindestens eines anderen Kabelkanalelements aus Blech am einen ihrer Enden zu gestatten, wobei diese Löcher oder Einschnitte derart angeordnet sind, daß sie im Augenblick des Einsetzens des Deckels durch die Muttern von Schrauben durchsetzt werden können, die die Verbindung zwischen den Laschen und den entsprechenden Seitenwänden des Kabelkanals gestatten, und zwar Schraubenmuttern, die auf Höhe der Löcher (83) oder Einschnitte der Seitenränder des Deckels (77) gelegen sind, wenn dieser auf das Kabelkanalelement aufgesetzt wird.

15. Deckelelement (77) und Kabelkanalelement nach Anspruch 14, dadurch gekennzeichnet, daß die Löcher (83), die in den Seitenrändern des Deckels ausgebildet sind, eine längliche Form aufweisen, die parallel zur Längsachse des Deckels verläuft, und eine Querbreiten aufweisen, die mindestens dem Umkreis der Schraubenmuttern (74) gleich ist, die für die Schraubverbindung der Laschen (72-1) benutzt sind.

16. Deckelelement und Kabalkanalelement nach Anspruch 14 oder 15, dadurch gekennzeichnet, daß das Deckelelement eine Länge aufweist, die gleich ist der eines Kabelkanalelements aus Blech (70), auf das es aufgesetzt werden soll, und daß die Löcher (83), die auf den Seitenrändern des Deckels ausgebildet sind, an den Enden des Deckels gelegen sind, wobei die Löcher (83) eine Anzahl aufweisen, die ausreicht, um in Eingriff rund um die Befestungsschrauben der Laschen zu gelangen.

17. Deckelelement (77) und Kabelkanalelement nach Anspruch 14, dadurch gekennzeichnet, daß die beiden Seitenränder (78-1) des Deckelelements Einschnitte (92) aufweisen, die die Höhe dieser Ränder auf eine solche Weise verringern, daß sie nicht mehr die Muttern (74, 75, 76) der Schrauben abdekken, die für die Befestigung der Laschen (72-1) an den Seitenwänden (78-1) der Kabelkanalelemente benutzt werden.

18. Deckelelement (77) und Kabelkanalelement nach Anspruch 17, dadurch gekennzeichnet, daß die Einschnitte von mehreren getrennten Einschnitten (93, 94, 95) gebildet sind, die dazu eingerichtet sind, jede der Muttern (74, 75, 76) der Schrauben teilweise zu umgeben, die für die Montage der Laschen (72-1) verwendet sind.

19. Deckelelement und Kabelkanalelement nach Anspruch 14, dadurch gekennzeichnet, daß die Löcher oder Einschnitte, die in den Seitenrändern (78-3) der Deckelelemente (77-1) ausgebildet sind, in einer durchgehenden Zone dieser Seitenränder derart angeordnet sind, daß man das Deckelelement rittlings über zwei Kabelkanalelemente setzen kann, die endweise durch Laschen zusammenmontiert sind.

20. Deckelelement aus Blech und Kabelkanalelement nach einem der Ansprüche 1 bis 19, dadurch gekennzeichnet, daß das Deckelelement Querrippen aufweist.

21. Verfahren zur Befestigung eines Deckelelements aus Blech auf einem Kabelkanalelement aus Metallblech (16) oder aus Metalldrahtgitter (25, 40), das einen U-förmigen Querschnitt aufweist und Durchlässe durch seine Seitenwände hindurch aufweist, die durch Löcher (17, 18) im Fall von Kabelkanalelementen aus Metallblech oder durch die Abstände gebildet sind, die durch die Kettfäden (46, 47) und Schußfäden (45-2) bzw. -drähte der Kabelkanalelemente aus Metalldrahtgitter gebildet sind, dadurch gekennzeichnet, daß man in einem Blechband geeigneter Länge und Breite mittels geeigneten Werkzeugs in der Nähe eines jeden der Längsränder dieses Bandes mindestens ein Befestigungsmittel ausschneidet, das von mindestens einer Befestigungsklaue (6, 8, 7, 9) gebildet ist, daß man dann die im wesentlichen rechtwinklige Umbiegung der Seitenränder (4, 5) des Bandes längs Biegekanten (33, 34) vornimmt, die parallel zur Längsachse des Bandes verlaufen, daß man dann die Seitenwände (19, 20, 41, 42) des Kabelkanalelements im Inneren der Seitenränder (4, 5) des so hergestellten Deckelelements (1) derart einsetzt, daß das freie Ende mindestens einer Befestigungsklaue (6, 8, 7, 9) auf jedem Deckelrand einem Durchlaß durch die entsprechende Seitenwand des Kabelkanalelements gegenüberliegt, und daß man dann dieses freie Ende derart umbiegt, daß es im Inneren des Kabelkanalelements eingreift und somit eine Verbindung zwischen diesem und dem Deckelelement herstellt.

## Claims

1. A cover element (1) of sheet metal mounted on a cable channel element (16, 25), said cable channel element (16, 25) being of U-shaped cross-section and comprising lateral passages (18) through its side walls (19, 20, 41, 42), the cover element comprising two side edges (4, 5), within which are engaged the ends of the side walls (19, 20) of the cable channel (16), characterised in that the cover element (1) comprises as a means for fixing on the cable channel element (16, 25) at each side (4, 5) at least one fixing lug (6, 7, 8, 9) which is cut out from its wall and which is fixed with respect thereto by way of one of its ends, the other end (14, 15, 31, 32) being free, the lug (6, 7, 8, 9) being capable from an initial position in the plane of a side edge (4, 5) of being bent with engagement of its free end (14, 15, 31, 32) in the interior of a lateral passage of the cable channel element (16, 25) so as to provide for localised support of the lug against a given region (17, 26, 46) of the side wall (19, 20) of the cable channel element (16, 25).

2. A cover element and cable channel element according to claim 1 characterised in that the cable channel is a cable channel (16) of sheet metal and that the cover element (1) comprises, cut out in each of its two side edges, at least one fixing lug (6, 8) which is elongate parallel to the longitudinal direction of the cover, each fixing lug being capable of being bent over towards the interior by being displaced in a plane substantially parallel to the longitudinal direction of the edge of the cover and perpendicular to the plane of said edge to come into engagement in a passage formed by a hole (17, 18) in the side wall (19, 20) of the sheet metal cable channel element (16) and disposed facing the fixing lug, the different fixing lugs being oriented in the same direction or oriented in opposite directions.

3. A cover element and cable channel element according to claim 2 characterised in that the fixing lug (6, 8) is substantially in the shape of a trapezium of which the small base which is in the vicinity of the free end (14, 15) is of a width less than that of the hole (17, 18) into which it is to engage and of which the large base which is disposed in the vicinity of the end which is fixed with respect to the edge of the cover (4, 5) is of sufficient width for the edges of the fixing lug, after engagement into the hole of the fixing lug, to co-operate with the edges of said hole to ensure locking of the cover.

4. A cover element and cable channel element according to claim 2 or claim 3 characterised in that each sheet metal cable channel element comprises on each side at least one elongate hole (17, 18) of substantially constant width (1), which is oriented parallel to the longitudinal direction of the cable channel, the two elongate holes being disposed in mutually facing relationship and being of a length (L) at least double that of a fixing lug (6, 8),two fixing lugs capable of each engaging into a hole being oriented in opposite directions, the ends thereof which are each fixed with respect to an edge of the cover being disposed substantially in the same transverse plane (P1) perpendicular to the longitudinal direction (X1-X1) of the cover element which is placed on the sheet metal cable channel element in such a way that said transverse plane (P1) intersects the two elongate holes (17, 18) through the middle.

5. A cover element and cable channel element according to claim 1 characterised in that the cable channel is a wire lattice cable channel (40) and that the cover element (1) comprises at least one fixing lug (7, 9) on each side, which is oriented transversely with respect to the longitudinal direction (X1-X1) of the cover element (1), of which at least the free end (31, 32) is disposed in the plane of the corresponding edge (4, 5) of the cover element, said fixing lug being capable of co-operating by bending inwardly of the lateral passages with a given region of the wall of the cable channel element, its bending movement being effected in a plane substantially perpendicular to the longitudinal direction (X1-X1) of the cover element so as to come to bear against the side wall of a cable channel element.

6. A cover element and cable channel element according to claim 5 characterised in that the cable channel element against which the fixing lug comes to bear is a warp wire.

7. A cover element and cable channel element according to claim 5 or claim 6 characterised in that the cover element comprises at least two fixing lugs (7, 9) disposed on opposite edges (4, 5) of the cover (1) and oriented transversely with respect to the longitudinal direction (X1-X1) of the cover element, said two fixing lugs being displaced relative to each other in such a way as to be disposed on respective sides of a transverse plane (P1) perpendicular to the longitudinal direction and being capable of each coming to bear by bending against the side wall, leaving between them a sufficient passage for a weft wire (28-2, 28-3).

8. A cover element and cable channel element according to claim 1 characterised in that the cover element comprises, cut out in each of its two side edges one above the other, at least one group (2, 3) of two fixing lugs comprising a longitudinal fixing lug (6, 8) parallel to the longitudinal direction (X1-X1) of the cover element (1) and a transverse fixing lug (7, 9) oriented perpendicularly to the first, the two fixing lugs disposed on one side of the cover being displaced relative to those disposed on the other side of the cover so as to be on respective sides of a transverse plane (P1) perpendicular to the longitudinal direction of the cover element.

9. A cover element and cable channel element according to claim 8 characterised in that the cover element comprises at given intervals over its length a plurality of groups (2, 3) of two fixing lugs which are oriented one longitudinally and one transversely with respect to the longitudinal direction (X1-X1) of the cover element, each group disposed on one edge of the cover being displaced with respect to another group disposed on the other edge of the cover in the immediate vicinity of a transverse plane (P1) perpendicular to the longitudinal direction of the cable channel element on respective sides thereof.

10. A cover element and cable channel element according to one of claims 5 to 9 characterised in that each transverse fixing lug (7, 9) is cut out in such a way that its side edges are extended beyond the bend lines (33, 34) of the edges (4, 5) of the cover (1), the region connecting said transverse lugs to the cover thus being on the main surface of the latter.

11. A cover element and cable channel element according to claim 10 characterised in that the side edges of each transverse fixing lug (7, 9) are extended on the main surface of the cover to a distance 'd' from the bend lines (33, 34) which is approximately equal to the diameter of a warp wire to facilitate bending of said transverse lugs about a portion (46) of corrugated warp wire (43) which is welded in butt relationship on a weft wire (28-2).

12. A cover element and cable channel element according to one of claims 1 to 11 characterised in that at least one fixing lug (6, 8, 7, 9) is provided with a hole (12, 13, 29, 30) of dimensions which are adapted to the introduction of the end of a rod forming a lever (10) capable of bending the fixing lug by a rotary movement to engage its free end in the interior of the cable channel element (16, 25, 40).

13. A cover element and cable channel element according to claim 12 characterised in that a rod forming a lever (10) is introduced into said hole (12, 13, 29, 30) and is elbow-bent to permit increased angular displacement.

14. A cover element (77) and cable channel element according to one of claims 2 to 4 characterised in that each of the two side edges (78-1, 78-2) of said cover (77) comprises at least one hole (83) or cut-out (92, 93) disposed facing a corresponding hole (91) in the other side edge, said holes or cut-outs being of a sufficient section for the passage of a nut of an assembly bolt for making it possible to make the butting connection by at least one connecting plate (72-1) between at least one side wall (71-1) of said sheet metal cable channel element (70) and the corresponding side wall (73) of at least one other sheet metal cable channel element at one of its ends, said holes or cut-outs being placed in such a way that, at the moment at which the cover is set in position, nuts of the bolts making the connection between the connecting plates and the corresponding side walls of the cable channel can pass through said holes or cut-outs, the nuts being disposed at the location of the holes (83) or cut-outs in the side edges of the cover (77) when the latter is in place on the cable channel element.

15. A cover element (77) and cable channel element according to claim 14 characterised in that the holes (83) in the side edges of the cover are of an elongate shape in parallel relationship with the longitudinal axis of the cover and are of a transverse width at least equal to the diameter of the circle circumscribed around the nuts (74) used for bolting the connecting plates (72-1).

16. A cover element and cable channel element according to claim 14 or claim 15 characterised in that the cover element is of a length equal to that of a sheet metal cable channel element (70) on which it is fitted and that the holes (83) in the side edges of the cover are disposed at the ends of the cover, the number of holes (83) being sufficient to engage around the fixing bolts for the connecting plates.

17. A cover element (77) and cable channel element according to claim 14 characterised in that the two side edges (78-1) of the cover element comprise cut-outs (92) which reduce the height of said edges in such a way that they do not cover the nuts (74, 75, 76) of the bolts used for fixing the connecting plates (72-1) to the side walls (78-1) of the cable channel elements.

18. A cover element (77) and cable channel element according to claim 17 characterised in that the cut-outs are formed by a plurality of separate cut-outs (93, 94, 95) capable of each partially surrounding the nuts (74, 75, 76) of the bolts used for assembly of the connecting plates (72-1).

19. A cover element and cable channel element according to claim 14 characterised in that the holes or cut-outs in the side edges (78-3) of the cover elements (77-1) are disposed in a linear region of said side edges so as to be able to place the cover element straddling two cable channel elements which are assembled in butting relationship by connecting plates.

20. A sheet metal cover element and cable channel element according to one of claims 1 to 19 characterised in that the cover element comprises transverse ribs.

21. A process for fixing a sheet metal cover element on a cable channel element (16) of metal sheet or of metal wire lattice (25, 40) of U-shaped cross-section and comprising passages through its two side walls formed by holes (17, 18) in the case of the cable channel elements of metal sheet or by the gaps defined by the warp wires (46, 47) and weft wires (45-2) of the cable channel elements in the form of metal wire lattices, characterised by cutting out in a strip of sheet metal of suitable length and width, by means of a suitable tool, in the vicinity of each longitudinal edge of said strip, at least one fixing means formed by at least one fixing lug (6, 8, 7, 9), then effecting bending substantially at a right angle of the side edges (4, 5) of the strip along the bend lines (33, 34) which are parallel to the longitudinal axis of the strip, then engaging the side walls (19, 20, 41, 42) of the cable channel element in the interior of the side edges (4, 5) of the cover element (1) produced in that way, in such a manner that the free end of at least one fixing lug (6, 8, 7, 9) on each edge of the cover is facing a passage through the corresponding side wall of the cable channel element, then bending said free end so as to engage it in the interior of the cable channel element, thus making a connection between the latter and the cover element.
